(19) Europäisches Patentamt
European Patent Office
Office européen des brevets

(11) EP 1 195 758 B1

(12) **EUROPEAN PATENT SPECIFICATION**

(45) Date of publication and mention of the grant of the patent:
**30.05.2007 Bulletin 2007/22**

(21) Application number: **01917650.2**

(22) Date of filing: **29.03.2001**

(51) Int Cl.:
***G11B 7/24*** *(2006.01)* ***C08J 5/18*** *(2006.01)*
***C08L 101/00*** *(2006.01)* ***C08L 69/00*** *(2006.01)*

(86) International application number:
**PCT/JP2001/002692**

(87) International publication number:
**WO 2001/073780 (04.10.2001 Gazette 2001/40)**

(54) **PROTECTIVE COAT FOR OPTICAL RECORDING MEDIUM AND OPTICAL RECORDING MEDIUM**

SCHUTZSCHICHT FÜR OPTISCHES AUFZEICHNUNGSMEDIUM UND OPTISCHES AUFZEICHNUNGSMEDIUM

GARNITURE DE PROTECTION POUR SUPPORT D'ENREGISTREMENT OPTIQUE ET SUPPORT D'ENREGISTREMENT OPTIQUE

(84) Designated Contracting States:
**DE FR GB NL**

(30) Priority: **29.03.2000 JP 2000090777**
**07.08.2000 JP 2000238249**

(43) Date of publication of application:
**10.04.2002 Bulletin 2002/15**

(73) Proprietor: **TEIJIN LIMITED**
**Osaka-shi**
**Osaka 541-0054 (JP)**

(72) Inventors:
- **UCHIYAMA, Akihiko, c/o TEIJIN Ltd, Tokyo Res. Cent Hino-shi, Tokyo 191-0065 (JP)**
- **KUSHIDA, Takashi, c/o TEIJIN Ltd, Tokyo Res. Cent Hino-shi, Tokyo 191-0065 (JP)**
- **TSUJIKURA, Masakazu, c/o TEIJIN Ltd, Tokyo Res. Ce Hino-shi, Tokyo 191-0065 (JP)**

(74) Representative: **Hallybone, Huw George et al**
**Carpmaels and Ransford,**
**43 Bloomsbury Square**
**London WC1A 2RA (GB)**

(56) References cited:
**WO-A1-99/00794** **JP-A- 7 256 664**
**JP-A- 9 007 222** **JP-A- 9 007 234**
**JP-B2- 2 774 114** **US-A- 5 051 314**

- **DATABASE WPI Section Ch, Week 199940 Derwent Publications Ltd., London, GB; Class A05, AN 1999-474127 XP002276967 & JP 11 199663 A (OSAKA GAS), 27 July 1999 (1999-07-27)**
- **PATENT ABSTRACTS OF JAPAN vol. 1997, no. 05, 30 May 1997 (1997-05-30) & JP 09 022002 A (TEJIN), 21 January 1997 (1997-01-21)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 195 758 B1

## Description

TECHNICAL FIELD

The present invention relates to a protecting film for optical recording to be used in an optical recording medium, and to an optical recording medium employing it.

BACKGROUND ART

A variety of optical recording media that allow reproduction and recording to be accomplished by light irradiation are used as optical recording media for recording of different types of computer, audio and video data; for example, in compact discs, rewritable optical magnetic discs and phase change-type discs, and the like, minute uneven grooves such as pregrooves or phase pits in which the recording of data information, tracking servo signals and the like are accomplished are formed in the data recording layer constituting the recording medium.

The structure of a read-only optical disc will be explained with reference to Fig. 1, as an embodiment of a conventional optical recording medium.

Fig. 1 is an abbreviated cross-sectional view of a common optical recording medium 10 of the prior art. As shown in Fig. 1, the optical recording medium 10 has a structure in which a data recording layer 15 is formed on one side of a transparent substrate 11, comprising minute unevenness such as guide grooves 12 or data pits 13 and a reflective film 14 covering the minute unevenness, while a protecting film 16 for the data recording layer is formed on the outside of the reflective film for mechanical durability. In the optical recording medium 10 shown in Fig. 1, a laser beam 18 which has been condensed with an objective lens 17 for the read pickup is irradiated onto the guide groove 12 or data pits 13 through the transparent substrate 11, for recording and reading of data.

The transparent substrate is usually a disc-shaped injection molded body made of a polymer such as polycarbonate.

However, with the higher data requirement in recent years there has been a demand for greater recording data volume in optical recording media. As means of achieving this it has been proposed to (1) increase the numerical aperture NA of the objective lens, (2) narrow the track pitch and (3) shorten the wavelength of the irradiated light in order to shorten the minimum pit length; optical recording media with a multilayer structure comprising a plurality of laminated data recording layers also exist, such as the DVD (Digital Versatile Disc), and some of these have been implemented.

As one example, a DVD has a track pitch of about 0.74 μm, compared to the approximately 1.6 μm for a compact disc. Usually, the recording wavelength for a DVD is 650 nm, compared to 780 nm for a compact disc. The numerical aperture NA of the objective lens for writing and reading of data is 0.6 for a DVD, compared to 0.5 for a compact disc.

In an effort to realize an optical recording medium with a higher recording density than DVDs, it has been attempted to apply green to blue laser light by further shortening the recording wavelength, or to increase the numerical aperture NA of the objective lens.

With increasingly higher recording densities of optical recording media, it is becoming necessary to further shrink the spot size of the laser beam irradiated onto the data recording layer through the objective lens. As a result, the position of the data signal approaches the surface of the optical disc. This has created a need to reduce the thickness of the layer on which the light is irradiated, i.e. the transparent substrate, for writing and reading of the data on the optical disc. This becomes apparent from the following relational expression.

$f = D/(2NA)$, $f > WD$ (where f is the focal length of the objective lens, D is the effective diameter of the objective lens, NA is the numerical aperture of the objective lens and WD is the vertical working distance of the objective lens). Also, the focal depth is expressed as $\lambda/(NA)^2$, the skew allowance as $\lambda/(NA)^3$ and the thickness irregularity allowance as $\lambda/(NA)^4$.

Thus, when the numerical aperture NA of the objective lens is set between 0.5-0.85 while maintaining the prescribed distance so that the objective lens does not impact with the optical recording medium, the distance between the laser beam irradiation surface and the data recording layer of the optical recording medium, i.e. the thickness of the transparent substrate, is 1.2 mm for NA = 0.5, for example. For NA = 0.6 the thickness of the transparent substrate is 0.6 mm, for NA = 0.75 the thickness of the transparent substrate is 0.3 mm and for NA = 0.85 the thickness of the transparent substrate is 0.1 mm; thus, increasing the numerical aperture NA of the objective lens requires a correspondingly smaller transparent substrate thickness.

However, the mechanical strength of the optical recording medium is commonly known to be proportional to the cube of the thickness, and therefore the situation described above creates a problem in that decreasing the thickness of the transparent substrate with increasing numerical aperture NA of the objective lens increases deformability of the substrate by the effects of orientation warping or thermal stress when the optical disc substrate is fabricated by injection molding as described above, such that the optical anisotropy is increased.

In order to avoid this problem, a method of directing light from the protecting film side in Fig. 1 has been proposed. For the purpose of the present invention, a system in which light is directed from the protecting film side will be referred to as a "film side-incident type", and a system in which light is directed from the transparent substrate side shown in Fig. 1 will be referred to as a "substrateside-incident type".

In a film side-incident type, the thickness of the protecting film must be equivalent to the thickness of the transparent substrate in the aforementioned substrateside-incident type, but even when the objective lens NA = 0.85, for example, the thickness of the protecting film must be 0.1 mm. The method of forming such a protecting film on the data recording layer may be a method of forming a photosetting resin or the like by spin coating, or a method of laminating a transparent film onto the data recording layer by way of an adhesive layer. The method of forming a photosetting resin or the like by spin coating is associated with the problem of thickness irregularities with films of approximately 0.1 mm, while the method of laminating a transparent film by way of an adhesive layer can result in the problem of optical anisotropy of the transparent film.

As mentioned above, an increasing NA of the objective lens due to higher densification of the optical recording medium means that a greater proportion of the light incident to the protecting film is incident at a slant shifted from the normal to the protecting film, even in a film-incident type. In most cases, the light source used in the optical recording medium is a laser and it is known that since the optical pickup system used therein employs polarized light, the presence of optical anisotropy in the protecting film constitutes a cause of noise.

For a transparent film used as the protecting film in a film side-incident type, since it is usually advantageous from the standpoint of moldability, it has been proposed to use a polycarbonate having polycondensed units of commercially available bisphenol A or norbornene resin composed of a thermoplastic polymer.

However, conventionally, the optical anisotropy of the protecting film has not been considered in the optical recording medium in a film side-incident type, or even when it has been considered, only the two-dimensional optical anisotropy within the plane of the protecting film has been dealt with. The present inventors realized, however, that when it is attempted to further increase the recording density in an optical recording medium of a film side-incident type, the incident angle of light is greater and the optical anisotropy is a problem not only within the plane of the protecting film but also in the film thickness direction of the protecting film, and found that while it is possible to reduce the optical anisotropy within the plane of a conventional protecting film, it is difficult to reduce the optical anisotropy in the film thickness direction of the protecting film.

In Japanese Patent No. 2774114 and Japanese Unexamined Patent Publication (Kokai) SHO No. 62-240901 there are generally disclosed non-birefringent materials which are composed of a mixture of a polymer with positive birefringence and a polymer with negative birefringence or a copolymer formed from a monomer that can form a homopolymer with positive birefringence and a monomer that can form a homopolymer with negative birefringence. These non-birefringent materials, however, are not designed based on research of birefringence of a protecting film for optical recording media as according to the present invention, and only two-dimensional birefringence is considered while three-dimensional birefringence is not considered.

Also, Japanese Unexamined Patent Publication (Kokai) HEI No. 2-304741 discloses injection molding of a polycarbonate resin derived from a bis(hydroxyphenyl)fluorene compound, for use as the substrate for an optical recording medium. However, this is not designed based on research as a protecting film for an optical recording medium as according to the present invention, and since it is a substrateside-incident type optical recording medium, it does not take into account three-dimensional birefringent anisotropy, which is a problem of protecting films for film side-incident type optical recording media.

In light of these problems of the prior art, it is an object of the present invention to provide a protecting film for an optical recording medium which is suitable as an optical recording medium protecting film with low optical anisotropy not only within the plane of the protecting film but also in the thickness direction of the protecting film, and particularly which can be applied even for short-wavelength lasers.

## DISCLOSURE OF THE INVENTION

In the course of detailed research on polymer structures, and especially on polymers having a main chain with an aromatic or aliphatic ring structure as materials exhibiting excellent heat resistance and water absorption, with the aim of developing an optical recording medium protecting film that can solve the aforementioned problems, it was found that a transparent film consisting of a single layer of a thermoplastic resin and having necessary properties such as heat resistance together with a specific wavelength dispersion can be suitably used as an optical recording medium protecting film for an optical recording device. The transparent film is composed of a thermoplastic resin and therefore has high homogeneity and productive yield.

The optical recording medium protecting film of the invention must have a glass transition temperature of 120°C or higher and a water absorption of no greater than 1 wt%. Protecting films without such physical property values cannot be practically used as optical recording medium protecting films.

As mentioned above, transparent films used as protecting films for film side-incident type optical recording media should have low optical anisotropy. In particular, since the proportion of light incident at a slant to the protecting film rises as the NA of the objective lens increases as explained above, low three-dimensional refractive index anisotropy is preferred as well. The three-dimensional refractive index anisotropy can be expressed in terms of R(550) and K(550), but while in the case of most studied thermoplastic resin transparent films it is possible to realize an absolute value of 10 nm or less for R(550), it is difficult in terms of production to achieve an absolute value of 40 nm or less for K(550). For example, films fabricated by solution cast film formation or melt extrusion from polycarbonates having polycondensed units of commercially available bisphenol A can achieve an R(550) of 10 nm or less, but an R(550) with an absolute value of 50 nm or less is difficult. When R(550) is nevertheless reduced, problems occur such as irregularities generated in the film surface or drastically hampered productivity, and thus it has been extremely difficult to actually obtain transparent films with small absolute values for R(550) and K(550).

Considering the definition of K(550), a large K(550) is resulted from that the refractive index in the film thickness direction differs considerably from the refractive index in the in-plane direction, and this is primarily due to the flow orientation during melt shaping of the film, or the flow orientation during evaporation of the solvent immediately after casting in the case of solution cast film formation, and the fact that the film must be stretched to eliminate wrinkles, etc. in the film during the subsequent drying step. However, there is a limit to the degree of reduction in the K value that can be achieved by modifying these film forming steps, and problems occur such as difficulty in achieving other properties such as surface flatness while also eliminating film thickness irregularities and optical irregularities, or problems of drastically reduced productivity.

Consequently, fundamental reduction in the K(550) of a transparent film requires research into the polymer structure, and particularly a polymer with a structure giving very small values for both R(550) and K(550) has been desired.

The optical anisotropy described above was expressed in terms of the retardation (nm), but the retardation can generally be expressed in terms of the angle as well. The conversion formula for retardation R1 expressed in terms of the angle and retardation R2 in nm units is R1(°) = (R2(nm)/$\lambda$) x 360 (where $\lambda$ is the retardation measuring wavelength). The value of the retardation R1 of a protecting film for an optical recording medium directly affects polarization of the reading light beam. That is, when R2 is always a constant value with respect to the retardation measuring wavelength used, R1 increases toward the short wavelength end. Because laser beam wavelengths are becoming progressively shorter due to recent demands for higher density recording, the retardation as R2 is preferably smaller with shorter wavelengths. However, for all ordinary transparent films made of polymer materials, R2 generally increases with shorter wavelengths, and no film has existed with the above desired properties together with excellent heat resistance and moisture resistance that can withstand practical use. Incidentally, retardation will be expressed in nm units throughout the present specification unless otherwise specified.

The short wavelength laser for the purpose of the present invention is a laser that emits light of a shorter wavelength than about 780 nm which has been conventionally used for CDs and the like, such as 650, 530 or 400 nm.

The present invention has been completed as a result of diligent research toward providing an optical recording medium protecting film with low optical anisotropy which is suitable for the protecting film of an optical recording medium and which is applicable for short wavelength lasers, by discovering that special selection of the material, in consideration of the production conditions of the film if necessary, allows production of an optical recording medium protecting film satisfying the conditions of a suitable glass transition temperature and water absorption as a protecting film for optical recording media and having sufficiently low three-dimensional optical anisotropy, and that the protecting film has the necessary physical properties and desired optical properties as a protecting film for a film side-incident type optical recording medium to enable higher density recording than with a substrateside-incident type, and can therefore contribute in a major way to the feasibility of film side-incident type optical recording media.

The prior art has included attempts to reduce birefringence by mixing or compounding components with positive and negative refractive index anisotropy, but since the main purpose of this has been to reduce the two-dimensional birefringence, even in cases where the three-dimensional birefringence has been considered, it has not been possible to realize low three-dimensional birefringence at the high level required for optical recording medium protecting films, as according to the present invention. According to the invention it was found that by mixing or compounding components with specific positive and negative refractive index anisotropy according to the principle described below, and more preferably using a selected combination of specific chemical components, it is possible to realize low three-dimensional birefringence anisotropy of such a high level in an optical recording medium protecting film, and that the protecting film has preferred properties desired for future film side-incident type optical recording medium protecting films.

Thus, the optical recording medium protecting film provided by the present invention is a protecting film consisting of a single transparent film made of a thermoplastic resin, having a glass transition temperature of 120°C or higher and a water absorption of no greater than 1 wt%, and having a retardation at a wavelength of 550 nm that satisfies both of the following inequalities (1) and (2).

$$|R(550)| \leq 15 \text{ nm} \quad (1)$$

$$|K(550)| \leq 40 \text{ nm} \quad (2)$$

(where R(550) is the in-plane retardation of the transparent film at wavelengths of 550 nm and K(550) is the value calculated by $K = [n_z - (n_x + n_y)/2] \times d$ {where $n_x$, $n_y$ and $n_z$ are the three-dimensional refractive indexes of the transparent film in the x-axis, y-axis and z-axis directions, respectively, and d is the thickness of the transparent film} for the transparent film at a wavelength of 550 nm.)

The optical recording medium protecting film of the invention is in the following manner significant for optical recording media.

Specifically, in a substrateside-incident type, light emitted from the semiconductor laser of the optical pickup is usually emitted through the lens after being converted to circularly polarized light, and is reflected on the data recording plane of the recording medium to return to the optical pickup, but the direction of propagation is altered by a polarized beam splitter or the like before entering the optical detector. The design is such that, due to the polarized beam splitter or the like, the light that has been reflected by the data recording surface does not return to the originating semiconductor laser. However, when the polarized beam has been altered by some factor, it returns to the semiconductor laser. This beam is referred to as the return beam, and although several factors are responsible, one that may be mentioned is the birefringence of the substrate. This is described, for example, in the book "Optical Disc Technology" (pp.66-75, particularly p.73, Radio Gijutsu Publication). The following relationship is known to exist between the birefringence Δ (deg.) of the substrate and the return light I.

$$I \propto \sin^2 (\Delta/2)$$

The return beam is preferably reduced to a minimum, since it is a cause of noise.

In a film side-incident type, the protecting film corresponds optically to the substrate in a substrateside-incident type, and therefore the birefringence of the protecting film must be reduced. For example, assuming that light with a wavelength of 400 nm entering a protecting film with a thickness of 75 μm enters at an incident angle of 40° with respect to the normal direction as 0°, then the relationship between the maximum retardation and the values of R and K, which changes until the light exits the protecting film, is as shown in the following table.

| Calculation example | R (nm) | K (nm) | 40° incident retardation (nm) | 40° incident retardation (deg.) |
|---|---|---|---|---|
| 1 | 5 | -20 | 8.6 | 7.7 |
| 2 | 10 | -100 | 28.1 | 25.3 |
| 3 | 15 | -50 | 25.9 | 23.3 |
| 4 | 25 | -20 | 28.7 | 25.8 |

Calculation Example 1 is assumed to be according to the invention, and the retardation at 40° incidence is much smaller than that of Calculation Examples 2-4. In actuality 40° incident light alone is not always present alone, but since the NA of the lens tends to be larger with greater recording medium density, the trend is on average toward an increasing incident angle of light entering the protecting film, which increase generally leads to a greater retardation change of the incident polarized beam. It is therefore important to control the three-dimensional refractive index of the protecting film, especially in a film side-incident type using a large NA. The K value reflects the optical anisotropy in the direction of the protecting film thickness and it is important to reduce it, but as is clear from Calculation Example 4, the K value alone is not sufficient, as the R value must also be below a certain range. As explained in the aforementioned "Optical Disc Technology", a correlation exists between the optical anisotropy represented by the K and R values of the protecting film and the noise during writing and reading, with a larger optical anisotropy thought to result in greater noise. Because of retardation wavelength dispersion in the protecting film, the retardation also depends on the wavelength of the laser beam from the optical pickup used, but in light of recent trends in the development of short-wavelength semiconductor lasers, devices with a wavelength of about 400-650 nm are expected to be widely used in the future, and

therefore for the present invention it was considered appropriate to define retardation of the protecting film with light of 550 nm, which is a wavelength in the middle of this range. If |R(550)| ≤ 15 nm and |K(550)| ≤ 40 nm, then the return beam due to optical anisotropy of the protecting film is essentially 0, and thus noise generation by optical anisotropy of the protecting film is essentially negligible.

As mentioned above, the optical recording medium protecting film of the invention can exhibit specific physical property values for the desired three-dimensional refractive index anisotropy, glass transition temperature and water absorption by purposeful selection of the specific material and consideration of the production conditions of the film depending on the need in accordance with the purpose of the invention. The preferred physical property values will now be discussed in greater detail.

According to the invention, the retardation of the protecting film at a wavelength of 550 nm satisfies the above inequalities (1) and (2), while more preferably, the retardation at wavelengths of 450 nm and 550 nm satisfy (A) the following inequalities (3) and (4), (B) the following inequality (3), or (C) the following inequality (4).

$$R(450) / R(550) < 1 \qquad (3)$$

$$K(450) / K(550) < 1 \qquad (4)$$

(where R(450) and R(550) are the in-plane retardation of the transparent film at wavelengths of 450 nm and 550 nm, respectively, and K(450) and K(550) are the values calculated by $K = [n_z - (n_x + n_y)/2] \times d$ {where $n_x$, $n_y$ and $n_z$ are the three-dimensional refractive indexes of the transparent film in the x-axis, y-axis and z-axis directions, respectively, and d is the thickness of the transparent film} for the transparent film at a wavelength of 450 nm and 550 nm respectively.)

If the optical anisotropy of an optical recording medium protecting film is low then inequalities (1) and (2) are satisfied, and if the retardation of an optical recording medium protecting film suitable for use in an optical recording medium using short-wavelength laser light is smaller with shorter wavelength, then inequalities (3) and/or (4) are satisfied.

The protecting film of the invention preferably has a smaller retardation of the transparent film with shorter wavelength in a measuring wavelength range of 380-550 nm, but from a more practical standpoint, the retardation of the transparent film at wavelengths of 450 nm, 550 nm and 650 nm satisfies preferably the following inequalities (5) and (6):

$$R(450) / R(550) < 0.95 \qquad (5)$$

$$R(650) / R(550) > 1.02 \qquad (6)$$

where R(650) is the in-plane retardation of the transparent film at a wavelength of 650 nm, and more preferably

$$R(450) / R(550) < 0.90 \qquad (7)$$

$$R(650) / R(550) > 1.03 \qquad (8).$$

Similarly, the K value of the transparent film at wavelengths of 450 nm, 550 nm and 650 nm satisfies preferably the following inequalities (9) and (10):

$$K(450) / K(550) < 0.99 \qquad (9)$$

$$K(650) / K(550) > 1.01 \qquad (10)$$

where K(650) is the K value of the transparent film at a wavelength of 650 nm, and more preferably

$$K(450) / K(550) < 0.95 \qquad (11).$$

$$K(650) / K(550) > 1.02 \quad (12).$$

According to the invention, the retardation and K value of the transparent film at wavelengths of 450 nm, 550 nm and 650 nm are denoted, respectively, as R(450), R(550), R(650) and K(450), K(550), K(650).

The retardation of the transparent film is the difference in phase based on the difference in the propagation speed (refractive index) of light in the direction of orientation of the film and the direction normal thereto, when the beam passes through a film of thickness d, and it is known to be represented by the product Δn·d of the difference Δn between the refractive indexes in the direction of orientation and the direction normal thereto, and the thickness d of the film.

Since the retardation Δn·d is proportional to the birefringence Δn if the film is transparent, the retardation wavelength dispersion (wavelength dependency) can be represented as the wavelength dispersion (wavelength dependency) of birefringence An.

When the refractive index in the orientation direction within the plane of the transparent film is larger than the refractive index in the direction normal thereto, it is said to have positive optical anisotropy, and in the opposite case it is said to have negative optical anisotropy. For example, in the case of uniaxial stretching of a film under a condition near its glass transition temperature Tg (Tg ±20°C), which is a known condition for production of retardation films, the orientation direction of the transparent film is the stretching direction. For biaxial stretching, it is the direction of stretching that produces the higher orientation.

According to the invention, the retardation refers to the absolute value of the retardation. When the optical anisotropy is negative the retardation is also negative, but according to the invention the positive or negative sign will be ignored unless otherwise specified.

The measuring optical wavelength used to determine the sign of the optical anisotropy was 550 nm.

According to the invention, the single transparent film made of a thermoplastic resin with low three-dimensional optical anisotropy is not particularly restricted so long as it can provide a transparent film simultaneously satisfying the above inequalities (1) and (2), and it may be obtained by selection of the materials and consideration of the production conditions in accordance with the need, and is preferably selected from among polymers satisfying the following condition (a) or (b). An optical recording medium protecting film satisfying condition (a) or (b) below is preferred from the standpoint of providing a transparent film with smaller retardation at shorter wavelengths.

(a) A transparent film (1) which is a film made of a polymer comprising a monomer unit of a polymer with positive refractive index anisotropy (hereunder referred to as "first monomer unit") and a monomer unit of a polymer with negative refractive index anisotropy (hereunder referred to as "second monomer unit");

(2) wherein the R(450)/R(550) of the polymer based on the first monomer unit is smaller than the R(450)/R(550) of the polymer based on the second monomer unit; and
(3) which has a positive refractive index anisotropy.

(b) A transparent film (1) which is a film made of a polymer comprising a monomer unit that forms a polymer with positive refractive index anisotropy (hereunder referred to as "first monomer unit") and a monomer unit that forms a polymer with negative refractive index anisotropy (hereunder referred to as "second monomer unit");

(2) wherein the R(450)/R(550) of the polymer based on the first monomer unit is larger than the R(450)/R(550) of the polymer based on the second monomer unit; and
(3) which has a negative refractive index anisotropy.

As a film satisfying the aforementioned conditions (a) or (b), there may be described one satisfying the following conditions (c) or (d).
(c) A transparent film (1) which is a film made of a blend polymer comprising a polymer with positive refractive index anisotropy and a polymer with negative refractive index anisotropy and/or a copolymer comprising a monomer unit of a polymer with positive refractive index anisotropy and a monomer unit of a polymer with negative refractive index anisotropy;

(2) wherein the R(450)/R(550) of the polymer with positive refractive index anisotropy is smaller than the R(450) /R(550) of the polymer with negative refractive index anisotropy; and
(3) which has a positive refractive index anisotropy.

(d) A transparent film (1) which is a film made of a blend polymer comprising a polymer with positive refractive index anisotropy and a polymer with negative refractive index anisotropy and/or a copolymer comprising a monomer unit of a polymer with positive refractive index anisotropy and a monomer unit of a polymer with negative refractive index anisotropy;

(2) wherein the R(450)/R(550) of the polymer with positive refractive index anisotropy is larger than the R(450) /R(550) of the polymer with negative refractive index anisotropy; and
(3) which has a negative refractive index anisotropy.

Here, a polymer with positive or negative refractive index anisotropy is a polymer that gives a transparent film with positive or negative refractive index anisotropy.
The reason for providing a material with low three-dimensional refractive index anisotropy as the transparent film is as follows. It is the same reason for the condition requiring the retardation to be smaller at shorter measuring wavelengths.
It is commonly known that the birefringence Δn of a polymer blend composed of two components, polymer A and polymer B, can be represented in the following manner (H. Saito and T. Inoue, J. Pol. Sci. Part B, 25, 1629(1987)).

$$\Delta n = \Delta n^0 A f A \phi A + \Delta n^0 B f B \phi B + \Delta n F \qquad (i)$$

where $\Delta n^0 A$ is the intrinsic birefringence of polymer A, $\Delta n^0 B$ is the intrinsic birefringence of polymer B, fA is the orientation function of polymer A, $f_B$ is the orientation function of polymer B, ϕA is the volume fraction of polymer A, ϕB is the volume fraction of polymer B (= 1-ϕA) and ΔnF is the structural birefringence. The birefringence Δn is generally expressed as $\Delta n = f\Delta n^0$. The value of $\Delta n^0$ can also be determined by combining dichromatic infrared spectroscopy with measurement of the retardation.
Equation (i) completely ignores changes in polarizability due to electrical interaction between polymers A and B, and this assumption will be adopted hereinafter as well. Because optical transparency is required for optically transparent film uses such as according to the invention, the blend is preferably a compatible blend, in which case ΔnF is extremely small and may be ignored.
For the transparent film having lower birefringence at shorter measuring wavelengths, the only measuring wavelengths considered here will be 450 nm and 550 nm. If the birefringence of the optical transparent film at each of these wavelengths is designated as Δn(450) and Δn(550), then Δn(450)/Δn(550) < 1. Naturally in the case of a retardation film made of an ordinary polymer film, Δn(450)/Δn(550) > 1, and for example, Δn(450)/Δn(550) for a polycarbonate obtained by polymerization of bisphenol A and phosgene is approximately 1.08, while it is about 1.01 even for polyvinyl alcohol which is considered to have low birefringence wavelength dispersion.
If Δn(450)/Δn(550) is the birefringence wavelength dispersion coefficient, then it may be represented as follows using equation (i).

$$\Delta n(450)/\Delta n(550) = (\Delta n^0 A(450) f A \phi A + \Delta n^0 B(450) f B \phi B)/(\Delta n^0 A(550) f A \phi A + \Delta n^0 B(550) f B \phi B) \qquad (ii)$$

Assuming that fA = fB because it is a compatible blend, equation (ii) may be rewritten as follows.

$$\Delta n(450)/\Delta n(550) = (\Delta n^0 A(450)\phi A + \Delta n^0 B(450)\phi B)/(\Delta n^0 A(550)\phi A + \Delta n^0 B(550)\phi B) \qquad (iii)$$

The imaginary values listed in Table 1 below were plugged into equation (iii) in order to examine the birefringence

wavelength dispersion values. In Table 1, the birefringence dispersion values for polymers A and B alone are listed instead of $\Delta n^0 A$ (450) and $\Delta n^0 B$ (450).

Table 1

| Case | $\Delta n^0 A(550)$ | $\Delta n^0 B(550)$ | $\Delta n^0 A(450)/ \Delta n^0 A(550)$ | $\Delta n^0 B(450)/ \Delta n^0 B(550)$ |
|---|---|---|---|---|
| 1 | 0.2 | -0.1 | 1.01 | 1.15 |
| 2 | 0.2 | -0.1 | 1.15 | 1.01 |
| 3 | 0.1 | -0.2 | 1.01 | 0.15 |
| 4 | 0.1 | -0.2 | 1.15 | 1.01 |

When the values in Table 1 are plugged into equation (iii), Figs. 5 to 8 are obtained as functions of $\phi A$. Cases 1-4 correspond to Figs. 5 to 8, respectively. In Table 1, polymer A represents a polymer with positive refractive index anisotropy while polymer B represents one with negative refractive index anisotropy, and therefore the optical anisotropy of the blend polymer is negative in the region in which $\phi A$ is less than the asymptotes in Figs. 5 to 8, while the anisotropy is positive in the region in which $\phi A$ is greater than the asymptotes.

As Figs. 5 to 8 clearly indicate, for $\Delta n(450)/\Delta n(550) < 1$ to be true, it is necessary for the birefringence wavelength dispersion coefficient of the positive polymer to be smaller than that of the negative one and for the optical anisotropy of the transparent film to be positive, as in cases 1 and 3 in Table 1, or for the birefringence wavelength dispersion coefficient of the positive polymer alone to be greater than that of the negative one and for the optical anisotropy of the transparent film to be negative, as in cases 2 and 4. Although typical wavelengths of 450 nm and 550 nm were used here, the same relationship is established even with other wavelengths.

Incidentally, in consideration of equation (iii), a transparent film according to the invention cannot be obtained when the birefringence wavelength dispersion coefficients of the positive and negative polymers are completely equal.

This consideration is based on equation (i) above, but the idea is very well substantiated in actual systems such as the examples described hereinafter, and it will also be shown to be correct by the examples. For example, with the polycarbonate copolymer having a fluorene skeleton in the following examples, the anisotropy is positive when $\Delta n(450)/\Delta n(550) < 1$, and therefore the value differs strictly speaking but corresponds to cases 1 and 3 of Table 1, while in the case of the polystyrene and polyphenylene oxide blend, the anisotropy is negative when $\Delta n(450)/\Delta n(550) < 1$, and therefore the value differs strictly speaking but corresponds to cases 2 and 4 in Table 1.

The above consideration was discussed for two components, but the same idea applies for three or more components. For example, in a system comprising two components with positive optical anisotropy and one component with negative anisotropy, the birefringence values and birefringence dispersion values of the components with positive optical anisotropy are compensated for by the volume fraction between the two components with positive anisotropy, and the two components can be considered as one component so that the idea based on equation (i) above, etc. can be applied.

The explanation based on equation (i) concerned a blend of polymers A and B, but the idea described above is similarly valid for a copolymer comprising monomer units of different polymers, in which case the idea may be applied by considering the copolymer to consist of a homopolymer (polymer A) based on a first monomer unit and a homopolymer (polymer B) based on a second monomer unit different from the first monomer unit.

Moreover, the same idea may be similarly applied even for a polymer blend of a homopolymer and a copolymer or a polymer blend of two copolymers. In this case, the idea may be applied by breaking the component polymers of the polymer blend down into the constituent monomer units, considering the polymer blend as an aggregate of homopolymers composed of each monomer unit, and considering the aggregate to be a combination of a component A composed of a group of homopolymers with positive optical anisotropy and a component B composed of a group of homopolymers with negative anisotropy.

For example, given polymers X and Y having positive optical anisotropy and a copolymer with monomer units x and z having negative optical anisotropy, considering that in a case where x has positive optical anisotropy and z has negative optical anisotropy, the components with positive optical anisotropy are X, Y and x, their birefringence values and birefringence dispersion values are compensated by the volume fraction between the three components with positive anisotropy, and the three components are considered to be a single component A while the component with negative anisotropy is considered to be component B composed of monomer unit z, and therefore the idea based on equations (i), etc. can be applied to component A and component B.

Incidentally, when the homopolymer is a polycarbonate as the homopolymer based on the first or second monomer unit, the polycarbonate is usually obtained by polycondensation of a dihydroxy compound and phosgene, and therefore from the standpoint of polymerization the monomers are the bisphenol-based dihydroxy compound and phosgene. For this type of polycarbonate, the monomer unit is the portion derived from the bisphenol and does not include the portion derived from the phosgene.

Most discussions will make a connection between the photoelasticity coefficient measured near room temperature and the retardation exhibited after polymer shaping or in the case of film shaping, after the film formation and stretching steps, but these are not actually in correlation. Rather, the retardation is the product of the birefringence and the film thickness while the birefringence is the product of the intrinsic birefringence and the orientation function, and therefore the intrinsic birefringence and the orientation function must be considered from the standpoint of molecular design. In order to obtain a transparent film with low retardation and high productivity, it is first necessary to reduce the intrinsic birefringence. Since the orientation function is a factor relating to the orientation of the polymer, it is thought to depend on the shaping process. When considering the solution cast film forming step commonly used as the shaping step for films, it is necessary to lower the orientation function through the process in the case of having a large intrinsic birefringence, and in the case of some external disturbance such as temperature irregularity or tension irregularity, this results in the non-uniformity of the orientation function, such that the obtained transparent film has a high retardation. On the other hand, if the intrinsic birefringence is low, the retardation would be expected to be low and uniform even with some irregularity in the orientation function. A material with low intrinsic birefringence is used according to the invention.

EMBODIMENTS OF CARRYING OUT THE INVENTION

The optical recording medium protecting film of the invention is characterized by being a single transparent film made of a thermoplastic resin, having a glass transition temperature of 120°C or higher and a water absorption of no greater than 1 wt%, and by simultaneously satisfying the aforementioned inequalities (1) and (2). It is also preferably characterized by simultaneously satisfying either or both of the aforementioned inequalities (3) and (4).

The inequalities (1) and (2) are preferably JR(550)1 ≤ 15 nm, |K(550)| ≤ 35 nm, more preferably |R(550)| ≤ 10 nm, |K(550)| ≤ 35 nm and even more preferably |R(550)| ≤ 5 nm, |K(550)| ≤ 20 nm. The retardation in inequalities (1) and (2) are defined at a wavelength of 550 nm, but the aforementioned values are preferably satisfied with measurement at the wavelength of the laser light used.

The principle has already been explained for a material which satisfies these properties with a single transparent film; a specific material will now be discussed.

The transparent film has a glass transition temperature of 120°C or higher. If it is below 120°C, problems such as warping during durability testing may occur. The water absorption is no greater than 1 wt%. If the water absorption of the transparent film is greater than 1 wt%, the optical recording medium protecting film may be problematic in practical terms. The water absorption is more preferably no greater than 0.5 wt%.

The transparent film of the invention is made of a thermoplastic resin, and as mentioned above, it may be composed of a blend polymer or copolymer.

There are no particular restrictions on the thermoplastic resin of the transparent film. A blend polymer or copolymer satisfying the above-mentioned conditions is preferred for use, and the thermoplastic resin preferably has excellent heat resistance, satisfactory optical performance and suitability for solution film formation. As examples of thermoplastic resins there may be appropriately selected any one or more from among polyarylates, polyesters, polycarbonates, polyolefins, polyethers, polysulfone-based copolymers, polysulfones, polyethersulfones or the like.

In the case of a blend polymer, the refractive index of the compatible blend or of each polymer is preferably approximately equal because of the need for optical transparency. As specific examples of combinations of blend polymers there may be mentioned a combination of poly(methyl methacrylate) as a polymer with negative optical anisotropy and a poly(vinylidene fluoride), a poly(ethylene oxide) or a poly(vinylidene fluoride-cotrifluoroethylene) as polymers with positive optical anisotropy, a combination of poly(phenylene oxide) as a polymer with positive optical anisotropy and polystyrene, poly(styrene-co-lauroyl maleimide), poly(styrene-co-cyclohexyl maleimide) and poly(styrene-co-phenyl maleimide) as polymers with negative optical anisotropy, a combination of poly(styrene-co-maleic anhydride) with negative optical anisotropy and a polycarbonate with positive optical anisotropy, a combination of poly(acrylonitrile-co-butadiene) with positive optical anisotropy and a poly(acrylonitrile-co-styrene) with negative optical anisotropy, and a combination of a polycarbonate with negative optical anisotropy and a polycarbonate with positive optical anisotropy, but there is no restriction to these. Particularly preferred from the standpoint of transparency are a combination of polystyrene and a poly(phenylene oxide) such as poly(2,6-dimethyl-1,4-phenylene oxide) and a combination of a polycarbonate (copolymer) with negative optical anisotropy and a polycarbonate (copolymer) with positive optical anisotropy. In the case of the former combination, the proportion of polystyrene is preferably from 67 wt% to 75 wt% of the total. In the latter case, it is preferably obtained by combining a polycarbonate with bisphenol A as the diol component and having positive optical anisotropy with a polycarbonate with bisphenolfluorene as the diol component and having a primarily fluorene skeleton. The content of the bisphenolfluorene component in the total blend is suitably 10-90 mole percent.

In the case of this type of blend polymer, a compatibilizing agent or the like may be added for improved

compatibility.

As copolymers there may be used, for example, poly(butadiene-co-polystyrene), poly(ethylene-copolystyrene), poly(acrylonitrile-co-butadiene), poly(acrylonitrile-co-butadiene-co-styrene), polycarbonate copolymer, polyester copolymer, polyester carbonate copolymer, polyarylate copolymer, and the like. Particularly preferred for the segment with the fluorene skeleton is a polycarbonate copolymer, a polyester copolymer, polyester carbonate copolymer or polyarylate copolymer with a fluorene skeleton, in order to result in negative optical anisotropy.

The polymer material may be a blend of two or more different copolymers, a blend of one or more copolymers with the aforementioned blend or another copolymer, or two or more different blends or copolymers or other polymer blends. In such cases, the content of the bisphenolfluorene component with respect to the total is suitably 10-90 mole percent.

The polycarbonate copolymer produced by reacting a bisphenol with or a compound which forms a carbonic acid ester such as diphenyl carbonate or phosgene exhibits superior transparency, heat resistance and productivity and is therefore particularly preferred. The polycarbonate copolymer is preferably a copolymer including structure with a fluorene skeleton. The component with the fluorene skeleton is preferably present at 1-99 mole percent.

Specifically, there may be mentioned a polycarbonate copolymer comprising 10-90 mole percent of a repeating unit represented by the following formula (I)

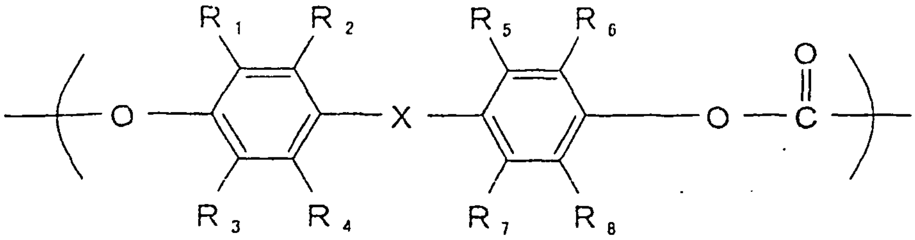

(I)

where $R_1$-$R_8$ each independently represent at least one selected from among hydrogen, halogens and hydrocarbons of 1-6 carbon atoms, and X is

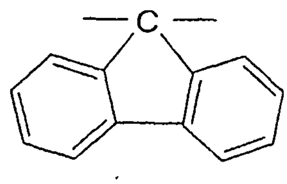

,

and 90-10 mole percent of a repeating unit represented by the following formula (II)

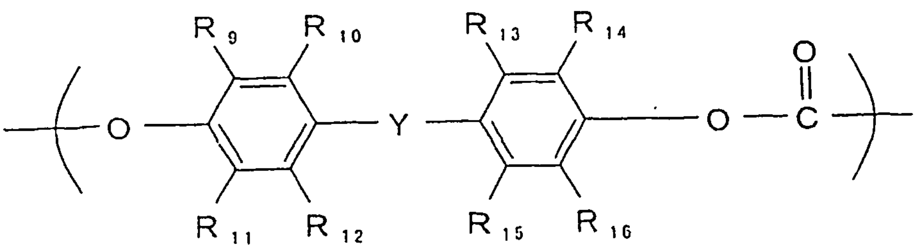

(II)

where $R_9$-$R_{16}$ each independently represent at least one selected from among hydrogen, halogens and hydrocarbons of 1-22 carbon atoms, and Y is one of the following formulas

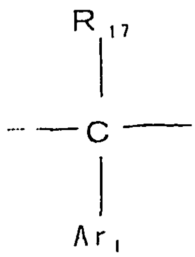 , 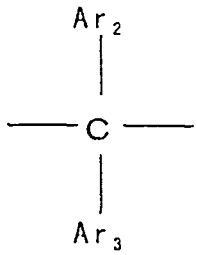 , 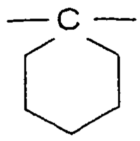 , 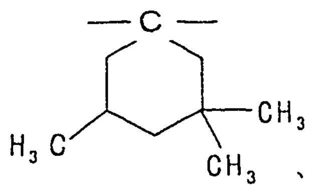 , 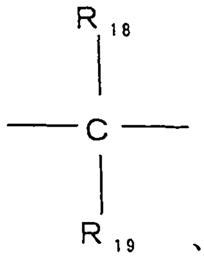 ,

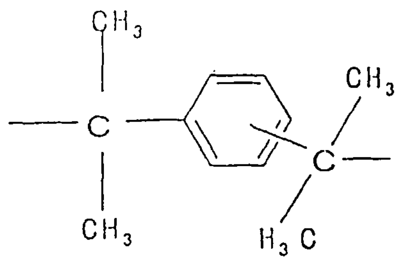 , 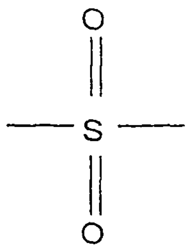 , 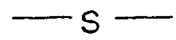 , 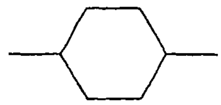 ,

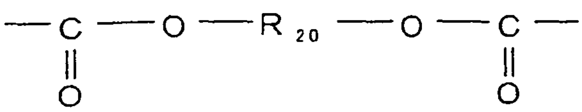 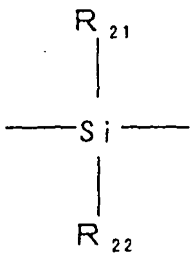 and 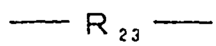

where $R_{17}$-$R_{19}$, $R_{21}$ and $R_{22}$ each independently represent at least one selected from among hydrogen, halogens and hydrocarbons of 1-22 carbon atoms, $R_{20}$ and $R_{23}$ each independently represent at least one selected from among hydrocarbons of 1-20 carbon atoms, and $Ar_1$, $Ar_2$ and $Ar_3$ each independently represent at least one selected from among aryl groups of 6-10 carbon atoms.

In formula (I), $R_1$-$R_8$ are independently selected from among hydrogen, halogens and hydrocarbons of 1-6 carbon atoms. As hydrocarbons of 1-6 carbon atoms there may be mentioned alkyl groups such as methyl, ethyl, isopropyl and cyclohexyl, and aryl groups such as phenyl. Hydrogen and methyl are preferred among these.

In formula (II), $R_9$-$R_{16}$ are independently selected from among hydrogen, halogens and hydrocarbons of 1-22 carbon atoms. As hydrocarbons of 1-22 carbon atoms there may be mentioned alkyl groups of 1-9 carbon atoms such as methyl, ethyl, isopropyl and cyclohexyl, and aryl groups such as phenyl, biphenyl and terphenyl. Hydrogen and methyl are preferred among these.

In Y in formula (II), $R_{17}$-$R_{19}$, $R_{21}$ and $R_{22}$ each independently represent at least one selected from among hydrogen, halogens and hydrocarbons of 1-22 carbon atoms. The same hydrocarbons mentioned above may be mentioned here as well. $R_{20}$ and $R_{23}$ are each independently selected from among hydrocarbons of 1-20 carbon atoms, and those mentioned above may be mentioned here as well. $Ar_1$, $Ar_2$ and $Ar_3$ are each an aryl group of 6-10 carbon atoms such as phenyl or naphthyl.

The transparent film of the invention is preferably made of a polycarbonate with a fluorene skeleton. A polycarbonate with a fluorene skeleton is preferred because it allows a smaller K value of the transparent film, and this is attributed to the fact that the refractive index is not significantly reduced in the direction of the film thickness due to the optically negative component even when the main chain is oriented in the plane. In the case of a polycarbonate with a fluorene skeleton, it is conjectured that the refractive index is not very low in the direction of the film thickness because the fluorene molecule has high refractive index anisotropy and the direction of the fluorene in which the refractive index

of the fluorene is high is also present in the direction of the film thickness even when the polycarbonate main chain is oriented in the plane.

The polycarbonate with the fluorene skeleton is preferably a polycarbonate copolymer composed of a repeating unit represented by formula (I) above and a repeating unit represented by formula (II) above or a blend of a polycarbonate composed of a repeating unit represented by formula (I) above and a polycarbonate composed of a repeating unit represented by formula (II) above, and the content of formula (I), i.e. the copolymer composition in the case of a copolymer or the blend composition ratio in the case of a blend, is suitably 10-90 mole percent of the total polycarbonate. When it is outside of this range, it becomes difficult to obtain a uniform retardation film with a low retardation value. The content of formula (I) is preferably 35-85 mole percent and more preferably 50-80 mole percent of the total polycarbonate.

The copolymer may include a combination of two or more different repeating units represented by formulas (I) and (II), and in the case of a blend as well, two or more different repeating units may be combined.

For either a copolymer and blend, the molar ratio can be determined using nuclear magnetic resonance (NMR), for example, with the whole bulk of the polycarbonate composing the transparent film.

The polycarbonate with the fluorene skeleton is most preferably a polycarbonate copolymer and/or blend comprising 30-85 mole percent of a repeating unit represented by the following formula (III)

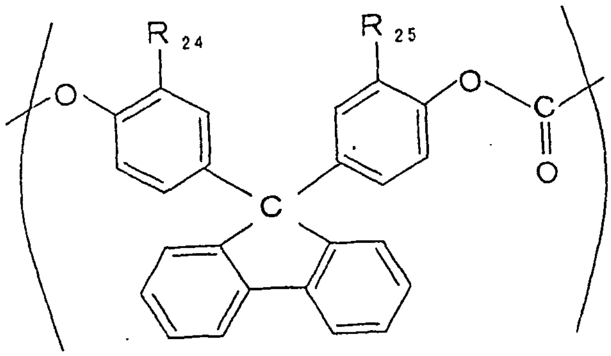

(III)

where $R_{24}$ and $R_{25}$ each independently represent at least one selected from among hydrogen and methyl, and 70-15 mole percent of a group represented by the following formula (IV)

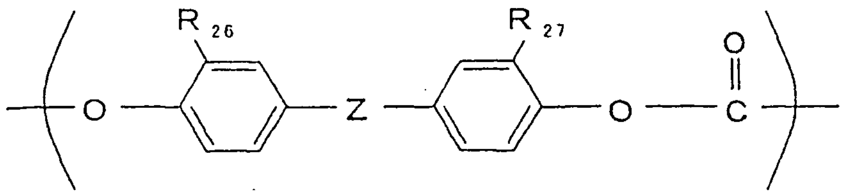

(IV)

where $R_{26}$ and $R_{27}$ are each independently selected from among hydrogen and methyl, and Z is at least one group selected from among the following groups.

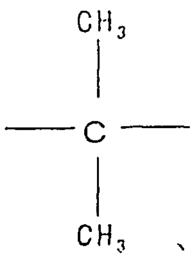 , 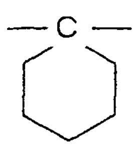 , 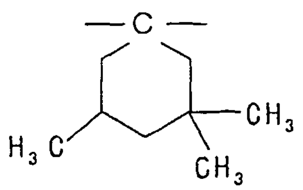 , and 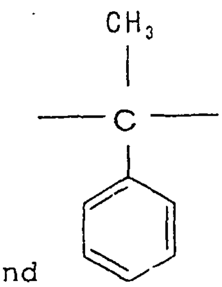

$R_{24}$ and $R_{25}$ in the repeating unit (III) are preferably methyl. Since the optical anisotropy is usually lower by the same cast film formation method when $R_{24}$ and $R_{25}$ are methyl than when they are hydrogen, it is easier to reduce the values of R and K. The specific reason for this is unclear, but it is conjectured that the three-dimensional structure differs as a result of the different molecular structure.

The above-mentioned copolymer and/or blend polymer can be produced by any known process. The polycarbonate may be obtained by a method of polycondensation or melt polycondensation of a dihydroxy compound and phosgene. In the case of a blend, a compatible blend is preferred but even without complete compatibility, matching the refractive indexes of the components can minimize light scattering between the components and improve the transparency.

The limiting viscosity of the polycarbonate (copolymer) is preferably 0.3-2.0 dl/g. If it is less than 0.3 dl/g such problems as brittleness and poorly maintained mechanical strength result, while if it is greater than 2.0 the solution viscosity increases too greatly, leading to such problems as creation of a die line during solution film formation and difficult purification when polymerization is complete.

The optical recording medium protecting film of the invention is preferably transparent, and thus the haze value of the transparent film is preferably no greater than 3%, and the total light beam transmittance is preferably 80% or greater and more preferably 85% or greater at a measuring wavelength of 380-780 nm. Colorless transparency is preferred, and the transparency is preferably no greater than 1.3 and more preferably no greater than 0.9 as defined by b* using a 2° visual field C light source according to the L*a*b* color specification in JISZ-8279.

There may also be added to the transparent film an ultraviolet absorber such as phenylsalicylic acid, 2-hydroxybenzophenone or triphenyl phosphate, a bluing agent for color adjustment, an antioxidant, or the like.

The method of producing the transparent film of the invention may be a known melt extrusion method, solution casting method or the like, but solution casting is preferred from the standpoint of film thickness irregularities and outer appearance.

With most solution cast films, the main chain tends to easily be oriented in the plane during the cast film formation and subsequent drying steps. During cast film formation, the contraction stress accompanying the solvent evaporation and the stress of transport under high temperature during the drying step cause orientation of the main chain in the direction of the stress, resulting in in-plane orientation. Here, in-plane orientation means that, in the case of a polymer material with positive optical anisotropy, the main chain is oriented parallel to the direction of the film surface, and the refractive index ($n_z$) in the direction of the film thickness is small with respect to the refractive index ($n_x$, $n_y$) in the in-plane direction. As a result, the K value increases with a larger in-plane orientation with the same R value, but when a conventional polycarbonate or amorphous polyolefin is used, it has been difficult to lower the absolute value of K due to in-plane orientation during the production step. Nevertheless, it has been confirmed possible to reduce the K value when a polymer material according to the invention is used, and this is attributed to the fact that the refractive index in the direction of film thickness is not reduced very much because of the optically negative component, even when the main chain is oriented in the plane. Particularly in the case of a polycarbonate with a fluorene skeleton, the fluorene molecules are considered to have high refractive index anisotropy, and it is conjectured that the refractive index in the direction of film thickness is not reduced very greatly because the direction of the large refractive index of the fluorene is also oriented in the direction of film thickness even when the polycarbonate main chain is oriented in the plane.

As concerns the optical anisotropy, completely different mechanisms are believed to be responsible for the optical anisotropy exhibited with injection molding and the optical anisotropy exhibited with solution cast film formation. Specifically, the optical anisotropy is not necessarily reduced even when a polymer material suitable for reducing the optical anisotropy in injection molding is molded by solution cast film formation. That is, in order to reduce the optical anisotropy it is preferred to design the polymer material in consideration of the method used to fabricate the film. Incidentally, by injection molding it is difficult to fabricate a transparent film with a film thickness of less than 200 $\mu$m and with low film thickness irregularity.

As the solvent for solution casting there may be suitably used methylene chloride, dioxirane and the like. The residual methylene chloride content is preferably no greater than 0.5 wt%, more preferably no greater than 0.3 wt% and even more preferably no greater than 0.1 wt%. The film obtained by this method may be imparted with the desired retardation by uniaxial or biaxial stretching.

An additive such as a plasticizer or the like may also be added to the transparent film. Such an additive can alter the retardation wavelength dispersion of the optical recording medium protecting film of the invention, and the amount of addition is preferably no greater than 10 wt% and more preferably no greater than 3 wt% with respect to the polymer solid content.

The thickness of the transparent film used as the optical recording medium protecting film is preferably from 5 $\mu$m to 200 $\mu$m. The film thickness is determined based on the laser beam wavelength and the lens NA used for the optical recording medium.

The irregularity (variation) in the film thickness of the protecting film is preferably no greater than 1.5 $\mu$m, more preferably no greater than 1 $\mu$m and even more preferably no greater than 0.6 $\mu$m. The method of measuring the film

thickness irregularity of the protecting film is the method described in the Examples. The film thickness irregularity is preferably as minimal as possible, because when the film thickness irregularity exceeds 2 μm the focus of the laser beam on the data recording layer becomes fuzzy or shifted due to diffraction of the laser beam, sometimes leading to problems such as recording or reading errors.

The transparent film of the invention is characterized by also having a high surface hardness. According to the invention, this is evaluated by the following measuring method using an ENT-1100 by Elionix Co., Ltd. Variations in the hardness can be produced depending on the condition of wear of the indenter used. It is therefore necessary to use a material exhibiting a constant hardness, such as a single crystal silicon wafer to confirm that the measured value is always constant, before measuring the hardness. Particularly when the measurement is carried out under conditions other than the measuring load described hereunder, differences in the tip shape of the indenter will show variations in the measured values even with the same sample, and therefore it is preferred for the measurement and comparison to be conducted as closely as possible in accordance with this measuring method.

According to the invention, satisfying an optical film hardness of 16 kg/mm$^2$ or greater can give an optical film with particularly excellent mar-proof properties. The hardness is preferably 18 kg/mm$^2$ or greater, and more preferably 20 kg/mm$^2$ or greater.

Films with optical anisotropy are generally known to exhibit a different retardation value for slanted incident light compared to front incident light. According to the invention, the three-dimensional refractive index of the transparent film is represented by $n_x$, $n_y$ and $n_z$, where these are defined as follows.

$n_x$: Refractive index in main orientation direction in the transparent film plane
$n_y$: Refractive index in direction orthogonal to main orientation direction in the transparent film plane
$n_z$: Refractive index in direction normal to the transparent film surface

Here, the main orientation direction means the flow direction of the film, and in terms of chemical structure it refers to the direction of orientation of the polymer main chain. The optical anisotropy is positive when $n_x > n_z$, and the optical anisotropy is negative when $n_x < n_z$. The three-dimensional refractive index is measured by polarizing analysis which is a method in which polarized light is directed to the transparent film and the polarized state of the emitted light is analyzed, but according to the invention the optical anisotropy of the transparent film is considered to be for a refractive index ellipsoid and the three-dimensional refractive index is determined by a method based on the known formula for a refractive index ellipsoid. Since the three-dimensional refractive index is dependent on the wavelength of the light source used, it is preferably defined by the wavelength of the light source used. The optical anisotropy can be represented using the three-dimensional refractive index by the following equation (13)

$$N_z = (n_x - n_z)/(n_x - n_y) \qquad (13)$$

but when this is used to define the three-dimensional refractive index, the incident angle dependency of the retardation is minimal when $N_z$ is in a range of 0.3-1.5. $N_z$ is preferably between 0.4 and 1.1, and particularly when $N_z$ = 0.5, the incident angle dependency of the retardation is substantially zero, so that the same retardation value results with any angle of light incidence.

According to the aforementioned definition, the refractive index of the slow axis of a transparent film with positive optical anisotropy as a transparent film according to the invention is $n_x$ and the refractive index of the fast axis is $n_y$.

As mentioned above, the specific chemical structure is important for achieving a smaller retardation at shorter wavelength with a transparent film used as an optical recording medium protecting film, with a considerable degree of the retardation wavelength dispersion being determined by the chemical structure, but is should also be noted that it will fluctuate depending on the additives, stretching conditions, blend state, molecular weight, etc.

According to the invention, the transparent film has low retardation and excellent heat resistance, durability and mechanical strength, and its use as a protecting film for the data recording layer of an optical recording medium can provide an optical recording medium allowing highly reliable high density recording.

The transparent film can be positioned as a protecting film for an optical recording medium on the recording layer, on the substrate or on another layer by adhesion using a known acrylic-based or other type of tackifier or adhesive agent.

Figs. 1 to 3 show examples of optical recording media employing an optical recording medium protecting film according to the invention, but these are not intended to be restrictive. Both the writing and reading beam are incident from the protecting film side.

The protecting film of the invention may have the data recording layer formed on either one or both sides above and below, and when the protecting film is positioned on the uppermost surface of the recording medium, a hardcoat

layer or anti-reflection layer may also be positioned on the protecting layer for improved hardness. If a hardcoat layer is used it may be a known acrylic-based or epoxy-based resin, for example, but there is no limitation to these. The protecting layer of the invention may be used in a plurality of number, instead of only one, for a single optical recording medium. By using a plurality of films it is possible to provide multiple data recording layers and thereby significantly improve the recording capacity.

BRIEF DESCRIPTION OF THE DRAWINGS

Fig. 1 is an abbreviated cross-sectional view of an optical recording medium according to the prior art.
Fig. 2 is an abbreviated cross-sectional view of an embodiment of a film side-incident optical recording medium using an optical recording medium protecting film according to the invention.
Fig. 3 is an abbreviated cross-sectional view of an embodiment of a film side-incident optical recording medium using an optical recording medium protecting film according to the invention.
Fig. 4 is an abbreviated cross-sectional view of an embodiment of a film side-incident optical recording medium using an optical recording medium protecting film according to the invention.
Fig. 5 is a graph showing the relationship between the birefringence wavelength dispersion and volume fraction $\phi A$ of a two-component blend polymer corresponding to Calculation Example 1 in Table 1.
Fig. 6 is a graph showing the relationship between the birefringence wavelength dispersion and volume fraction $\phi A$ of a two-component blend polymer corresponding to Calculation Example 2 in Table 1.
Fig. 7 is a graph showing the relationship between the birefringence wavelength dispersion and volume fraction $\phi A$ of a two-component blend polymer corresponding to Calculation Example 3 in Table 1.
Fig. 8 is a graph showing the relationship between the birefringence wavelength dispersion and volume fraction $\phi A$ of a two-component blend polymer corresponding to Calculation Example 4 in Table 1.
Fig. 9 is a graph showing the relationship between the polyphenylene oxide volume fraction and R(450)/R(550) for a blend of polystyrene and polyphenylene oxide (measured values).
Fig. 10 is a graph showing the relationship between the polyphenylene oxide volume fraction and R(450)/R(550) for a blend of polystyrene and polyphenylene oxide (calculated values).

EXAMPLES

The present invention will now be explained in greater detail by way of the following examples, with the understanding that the invention is in no way limited to these examples.

(Evaluation methods)

The material property values mentioned throughout the present specification were obtained by the following evaluation methods.

(1) Measurement of retardation value ($R = \Delta n \cdot d$ (nm)) and K value

The retardation R value of the optical recording medium protecting film, which is the product of the birefringence $\Delta n$ and the film thickness d, and the $N_z$ value, were measured with a spectral ellipsometer ("M150", product of Jasco Corp.). The R value was measured with the incident light beam and the film surface orthogonal to each other. The K value (nm) is determined by changing the angle of the incident light beam and the film surface, measuring the retardation value at each angle, then calculating $n_x$, $n_y$ and $n_z$ as the three-dimensional refractive indexes by curve fitting with an equation for a known refractive index ellipsoid, and substituting these values into the following equation (14).

$$K = (n_z - (n_x + n_y)/2)*d \qquad (14)$$

(2) Measurement of water absorption

This was measured according to "Test Methods for Plastic Water absorption and Boiling Water Absorption" described in JIS K7209, except that the thickness of the dried film was 130 ±50 μm. The size of the test piece is a 50 mm square, and the change in weight is measured after immersing the sample into warm water at 25°C for 24 hours.

This is the saturation water absorption which is given in % units.

(3) Measurement of polymer glass transition temperature (Tg)

This was measured by DSC ("DSC2920 Modulated DSC" by TA Instruments Corp.). It was measured not after film formation but after resin polymerization, while in the state of flakes or chips.

(4) Film thickness measurement

This was measured with an electronic micro-meter (Anritsu Co.).

(5) Measurement of film thickness irregularity

This was continuously measured using a KG601A film thickness tester by Anritsu Co. The sampling of the measured film was carried out as follows. Ten long strips were continuously cut out perpendicular to the direction of film winding at 5 cm spacings in the direction of the film winding (a total of 50 cm in the direction of film winding). The thickness distribution of each of the samples was measured with the above-mentioned film thickness tester. The film thickness was taken as the average of these measurements, and the thickness spot refers to the maximum difference between the maximum value and minimum value (thickness range) as measured for the 10 films.

(6) Measurement of polymer copolymerization ratio

This was measured by proton NMR ("JNM-alpha600" by Nippon Denshi Co., Ltd.) Particularly in the case of bisphenol A and biscresolfluorene copolymer, it was calculated from the proton intensity ratio for each methyl group, using heavy benzene as the solvent.

(7) Measurement of transmittance

A spectrophotometer ("U-3500" by Hitachi Laboratories) was used. The measuring wavelength was 380-780 nm, but the representative measuring wavelength of 550 nm was listed for the examples.

(8) Measurement of hardness

The film hardness was measured using an ENT-1100 nano indentation tester by Elionix Co., Ltd. The measuring conditions were a maximum load of 50 mgf, a data uptake step of 0.2 mgf, a data uptake interval of 40 msec and a maximum load holding time of 1 sec, using an indenter with a diamond triangular pyramid (115°) tip, and the average of 5 continuous measurements was taken for each load. The sample was fixed onto a metal sample stage using an instant adhesive with the trade name. "Aronarufa (201)" by Toa Gosei Co., Ltd., and measurement was made after allowing it to stand for 24 hours in an atmosphere at 25°C. The hardness is the value obtained from the following equation (2).

$$\text{Hardness (kg/mm}^2) = 3.7926 \times 10^{-2} \times \text{maximum load/(maximum displacement)}^2 \quad (2)$$

(The units are mg for the maximum load and μm for the maximum displacement.)

The monomer structures of the polycarbonates used in the examples and comparative examples are shown below.

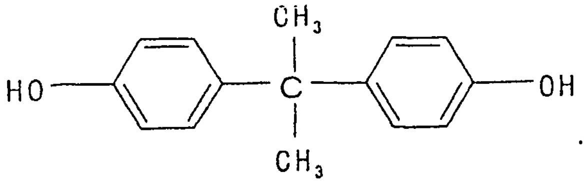

[A]

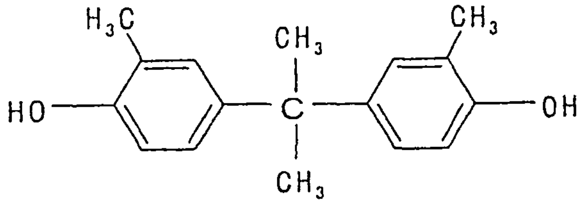

[B]

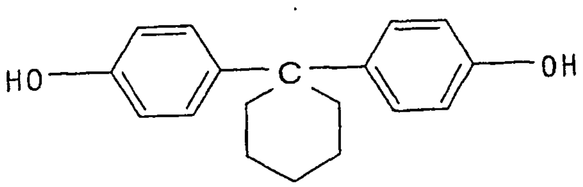

[C]

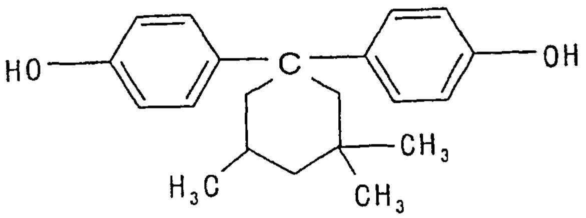

[D]

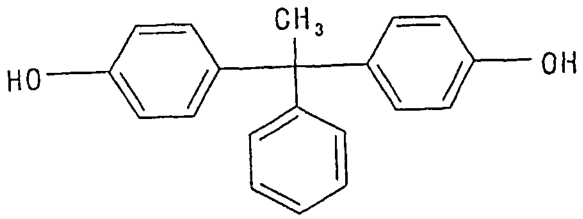

[E]

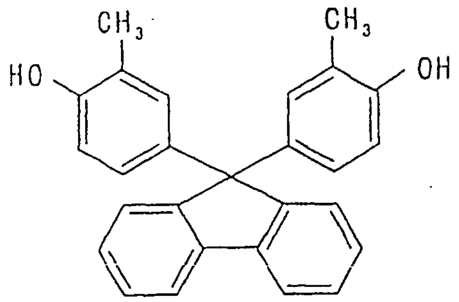

[F]

[Example 1]

After charging an aqueous sodium hydroxide solution and ion-exchanged water into a reactor equipped with a stirrer, thermometer and reflux condenser, monomers [A] and [F] having the structures shown above were dissolved in the molar ratios listed in Table 2, and a small amount of hydrosulfite was added. Methylene chloride was added thereto, and phosgene was blown in for about 60 minutes at 20°C. After adding p-tert-butylphenol for emulsification, triethylamine was added and the mixture was stirred at 30°C for about 3 hours to complete the reaction. After completion of the reaction, the organic phase was separated off and the methylene chloride was evaporated to obtain a polycarbonate copolymer. The compositional ratio of the obtained copolymer was approximately the same as the monomer charging ratio.

The copolymer was dissolved in methylene chloride to prepare a dope solution with a solid concentration of 20 wt%. A cast film was fabricated from the dope solution to obtain a transparent film. The thickness irregularity of the film was 1 μm.

The measurement results are summarized in Table 2. The film had small R and K values, and the range of variation of R(550) as measured in the width direction of a 1 m wide film was ±0.5 nm. The retardation was smaller at a smaller wavelength in the measuring wavelength range of 380-780 nm, and the optical anisotropy was confirmed to be positive. It was demonstrated to be suitable as a protecting film for an optical recording medium.

The polycarbonate film was coated to 2 μm with a liquid photosetting resin and a disk was punched out, and then the liquid photosetting resin was used as an adhesive to attach it to a 1.2 mm thick optical disk support substrate to fabricate a film side-incident type high density optical recording medium.

The high density optical recording medium was found to have low error and satisfactory properties even with a large aperture number of 0.85.

[Example 2]

A polycarbonate copolymer was obtained by the same method as Example 1, except that the monomers listed in Table 2 were used. The compositional ratio of the resulting copolymer was approximately the same as the monomer charging ratio. A film was formed in the same manner as Example 1 to obtain a transparent film. The measurement results are summarized in Table 2. It was confirmed that the film had small R and K values in the measuring wavelength range of 380-780 nm, the retardation was smaller at a smaller wavelength, and the refractive index anisotropy was positive. It was demonstrated to be suitable as a protecting film for a film side-incident type optical recording medium.

[Example 3]

A polycarbonate copolymer was obtained by the same method as Example 1, except that the monomers listed in Table 2 was used. The compositional ratio of the resulting copolymer was approximately the same as the monomer charging ratio. A film was formed in the same manner as Example 1 to obtain a transparent film. The measurement results are summarized in Table 2. It was confirmed that the film had small R and K values in the measuring wavelength range of 380-780 nm, the retardation was smaller at a smaller wavelength, and the refractive index anisotropy was positive. It was demonstrated to be suitable as a protecting film for a film side-incident type optical recording medium.

[Example 4]

A polycarbonate copolymer was obtained by the same method as Example 1, except that the monomers listed

in Table 2 was used. The compositional ratio of the resulting copolymer was approximately the same as the monomer charging ratio. A film was formed in the same manner as Example 1 to obtain a transparent film. The measurement results are summarized in Table 2. It was confirmed that the film had small R and K values in the measuring wavelength range of 380-780 nm, the retardation was smaller with smaller wavelength, and the refractive index anisotropy was positive. It was demonstrated to be suitable as a protecting film for a film side-incident type optical recording medium.

[Example 5]

A polycarbonate copolymer was obtained by the same method as Example 1, except that the monomers listed in Table 2 was used. The compositional ratio of the resulting copolymer was approximately the same as the monomer charging ratio. A film was formed in the same manner as Example 1 to obtain a transparent film. The measurement results are summarized in Table 2. It was confirmed that the film had small R and K values in the measuring wavelength range of 380-780 nm, the retardation was smaller with smaller wavelength, and the refractive index anisotropy was positive. It was demonstrated to be suitable as a protecting film for a film side-incident type optical recording medium.

[Example 6]

A polycarbonate copolymer was obtained by the same method as Example 1, except that the monomers listed in Table 2 was used. The compositional ratio of the resulting copolymer was approximately the same as the monomer charging ratio. A film was formed in the same manner as Example 1 to obtain a transparent film. The measurement results are summarized in Table 2. It was confirmed that the film had small R and K values in the measuring wavelength range of 380-780 nm, the retardation was smaller with smaller wavelength, and the refractive index anisotropy was positive. It was demonstrated to be suitable as a protecting film for a film side-incident type optical recording medium.

[Example 7]

Polystyrene as a polymer with negative refractive index anisotropy (Wako Pure Chemical Industries, Ltd.) and a polyphenylene oxide as a polymer with positive refractive index anisotropy (poly(2,6-dimethyl-1,4-phenylene oxide, product of Wako Pure Chemical Industries, Ltd.) were dissolved in chloroform at a proportion of 70 and 30 wt%, respectively, to prepare a dope solution with a solid concentration of 18 wt%. A cast film was fabricated from the dope solution to obtain a transparent film.

The measurement results are summarized in Table 2. It was confirmed that the film had small R and K values in the specific wavelength range of 380-780 nm, the retardation was smaller at a smaller wavelength, and the refractive index anisotropy was negative. It was demonstrated to be suitable as a protecting film for an optical recording medium using a film side-incident type optical recording device employing short wavelength laser.

For reference, Fig. 9 shows the relationship between the birefringence wavelength dispersion coefficient and the polyphenylene oxide volume fraction with different blend ratios of the polystyrene and polyphenylene oxide. Here it is seen that the optical anisotropy is negative in the region of low polyphenylene oxide content, and a region is present in which the birefringence wavelength dispersion coefficient is generally smaller than 1. On the other hand, the value is greater than 1 in the region with a high polyphenylene oxide content and positive refractive index anisotropy.

Next, equation (iii) was then used to calculate the relationship between the volume fractions and birefringence wavelength dispersion coefficients in Fig. 9, giving the graph shown in Fig. 10. Fig. 10 was calculated with intrinsic birefringence values of -0.10 and 0.21 for polystyrene and polyphenylene oxide at a wavelength of 550 nm (see D. Lefebvre, B. Jasse and L. Monnerie, Polymer 23, 706-709(1982)) and R(450)/R(550) values of 1.06 and 1.15, respectively. Close matching is seen between Figs. 9 and 10. The densities of the polystyrene and polyphenylene oxide were 1.047 and 1.060 g/cm$^3$, respectively.

[Example 8]

A polycarbonate copolymer was obtained by the same method as Example 1, except that the monomers listed in Table 2 were used. The compositional ratio of the resulting copolymer was approximately the same as the monomer charging ratio. A film was formed in the same manner as Example 1 to obtain a transparent film. The measurement results are summarized in Table 2. It was confirmed that the film had small R and K values in the measuring wavelength range of 380-780 nm, the retardation was smaller at a smaller wavelength, and the refractive index anisotropy was positive. It was demonstrated to be suitable as a protecting film for a film side-incident type optical recording medium.

Table 2

| | Example 1 | Example 2 | Example 3 | Example 4 | Example 5 | Example 6 | Example 7 | Example 8 |
|---|---|---|---|---|---|---|---|---|
| Monomer 1 structure (charging mole %) | [A] (32) | [A] (40) | [B] (59) | [C] (35) | [D] (34) | [E] (50) | - | [A] (41) |
| Monomer 2 structure (charging mole %) | [F] (68) | [F] (60) | [F] (41) | [F] (65) | [F] (66) | [F] (50) | - | [F] (59) |
| R(400)(nm) | 2.1 | 6.1 | 4.1 | 5.2 | 4.8 | 7.4 | -9.2 | 0.4 |
| R(450)(nm) | 3.6 | 6.6 | 5.6 | 7.0 | 5.8 | 10.9 | -11.9 | 0.5 |
| R(550)(nm) | 4.7 | 7.2 | 7.0 | 8.9 | 6.7 | 13.9 | -13.7 | 0.5 |
| R(650)(nm) | 5.2 | 7.2 | 7.5 | 9.7 | 7.7 | 15.1 | -14.5 | 0.4 |
| R(450)/R(550) | 0.759 | 0.916 | 0.793 | 0.790 | 0.858 | 0.784 | 0.759 | 1 |
| R(650)/R(550) | 1.099 | 1.006 | 1.071 | 1.090 | 1.142 | 1.086 | 1.099 | 0.8 |
| K(400)(nm) | -3.1 | -6.8 | -5.0 | -3.1 | -5.1 | -4.9 | -10.1 | -10.9 |
| K(450)(nm) | -4.0 | -7.1 | -5.3 | -3.8 | -5.5 | -5.5 | -9.3 | -11.5 |
| K(550)(nm) | -5.3 | -7.2 | -6.8 | -4.4 | -6.7 | -6.8 | -12.3 | -12.1 |
| K(650)(nm) | -5.8 | -7.3 | -7.6 | -4.8 | -7.8 | -7.6 | -13.4 | -12.5 |
| K(450)/K(550) | 0.757 | 0.958 | 0.779 | 0.864 | 0.821 | 0.809 | 0.757 | 0.950 |
| K(650)/K(550) | 1.086 | 1.014 | 1.118 | 1.091 | 1.164 | 1.118 | 1.086 | 1.033 |
| Film thickness (μm) | 70 | 50 | 80 | 101 | 71 | 91 | 75 | 95 |
| Glass transition temperature (°C) | 227 | 220 | 192 | 233 | 248 | 230 | 134 | 219 |
| Water absorption (wt%) | 0.2 | 0.2 | 0.2 | 0.2 | 0.2 | 0.2 | 0.3 | 0.2 |
| Transmittance (550 nm) | 90 | 90 | 90 | 90 | 90 | 90 | 91 | 90 |
| Hardness ($kg/mm^2$) | 24 | 22 | 20 | 25 | 25 | 23 | - | 22 |

[Comparative Example 1]

A film was formed in the same manner as Example 1 using a commercially available polycarbonate composed of polycondensed bisphenol A and phosgene ("PANLITE C1400" by Teijin Chemicals, Ltd.). The measurement results are summarized in Table 3. The surface hardness of the film was 15 $kg/mm^2$. The K value was highly negative while the retardation was larger at a shorter measuring wavelength, thus demonstrating that the film was unsuitable as an optical recording medium protecting film for a film side-incident type optical recording device employing short wavelength laser.

[Comparative Example 2]

A norbornene resin ("ARTON" by JSR Co.) was used to form a film in the same manner as Example 1. The measurement results are summarized in Table 3. The K value was highly negative while the retardation was larger at a shorter measuring wavelength, thus demonstrating that the film was unsuitable as a film side-incident type optical recording medium protecting film.

Table 3

| | Comp. Ex. 1 | Comp. Ex. 2 |
|---|---|---|
| R(450)(nm) | 14.8 | 10.2 |
| R(550)(nm) | 13.7 | 10.1 |
| R(650)(nm) | 13.2 | 9.9 |
| R(450)/R(550) | 1.080 | 1.010 |
| R(650)/R(550) | 0.960 | 0.990 |
| K(450)(nm) | -85.7 | -53.7 |
| K(550)(nm) | -80.1 | -53.1 |
| K(650)(nm) | -79.0 | -52.7 |
| K(450)/K(550) | 1.07 | 1.01 |
| K(650)/K(550) | 0.986 | 0.99 |
| Film thickness after stretching (μm) | 90 | 75 |

INDUSTRIAL APPLICABILITY

As explained above, according to the present invention, it is possible to efficiently provide a film side-incident type optical recording medium protecting film as a single transparent film made of a thermoplastic resin, which exhibits the required physical properties, low three-dimensional optical anisotropy and preferably lower retardation at shorter wavelengths, so that the optical recording medium can be used to realize a film side-incident type recording medium with high recording density.

## Claims

1. An optical recording medium protecting film **characterized by** being a single transparent film made of a thermoplastic resin, having a glass transition temperature of 120°C or higher and a water absorption of no greater than 1 wt%, and having a retardation at a wavelength of 550 nm that satisfies both of the following inequalities (1) and (2).

$$|R(550)| \leq 15 \text{ nm} \qquad (1)$$

$$|K(550)| \leq 40 \text{ nm} \qquad (2)$$

where R(550) is the in-plane retardation of the transparent film at a wavelength of 550 nm and K(550) is the value calculated by $K = [n_z - (n_x + n_y)/2] \times d$ (where $n_x$, $n_y$ and $n_z$ are the three-dimensional refractive indexes of the transparent film in the x-axis, y-axis and z-axis directions, respectively, and d is the thickness of the transparent film) for the transparent film at a wavelength of 550 nm.

2. An optical recording medium protecting film according to claim 1, wherein the retardations at wavelengths of 450 nm and 550 nm satisfy (A) both the following inequalities (3) and (4), (B) the following inequality (3), or (C) the following inequality (4).

$$R(450) / R(550) < 1 \qquad (3)$$

$$K(450) / K(550) < 1 \qquad (4)$$

where R(450) and R(550) are the in-plane retardation of the transparent film at wavelengths of 450 nm and 550 nm, respectively, and K(450) and K(550) are the values calculated by $K = [n_z - (n_x + n_y)/2] \times d$ (where $n_x$, $n_y$ and $n_z$ are the three-dimensional refractive indexes of the transparent film in the x-axis, y-axis and z-axis directions, respectively, and d is the thickness of the transparent film) for the transparent film at a wavelength of 450 nm and 550 nm respectively.

**3.** An optical recording medium protecting film according to claim 2, wherein the in-plane retardation of the transparent film in a wavelength range of 380-550 nm is lower as the wavelength is smaller.

**4.** An optical recording medium protecting film according to claim 1, which comprises a transparent film

(1) which is a film made of a polymer comprising a monomer unit of a polymer with positive refractive index anisotropy (hereunder referred to as "first monomer unit") and a monomer unit of a polymer with negative refractive index anisotropy (hereunder referred to as "second monomer unit");
(2) wherein the R(450)/R(550) of the polymer based on the first monomer unit is smaller than the R(450)/R(550) of the polymer based on the second monomer unit; and
(3) which has a positive refractive index anisotropy.

**5.** An optical recording medium protecting film according to claim 1, which comprises a transparent film

(1) which is a film made of a polymer comprising a monomer unit that forms a polymer with positive refractive index anisotropy (hereunder referred to as "first monomer unit") and a monomer unit that forms a polymer with negative refractive index anisotropy (hereunder referred to as "second monomer unit");
(2) wherein the R(450)/R(550) of the polymer based on the first monomer unit is larger than the R(450)/R(550) of the polymer based on the second monomer unit; and
(3) which has a negative refractive index anisotropy.

**6.** An optical recording medium protecting film according to claim 1, wherein the thickness irregularity of the transparent film is no greater than 1.5 μm.

**7.** An optical recording medium protecting film according to claim 1, wherein said transparent film comprises a polycarbonate with a fluorene skeleton.

**8.** An optical recording medium protecting film according to claim 6, **characterized in that** the transparent film is a transparent film made of a polycarbonate copolymer and/or blend comprising 10-90 mole percent of a repeating unit represented by the following formula (I)

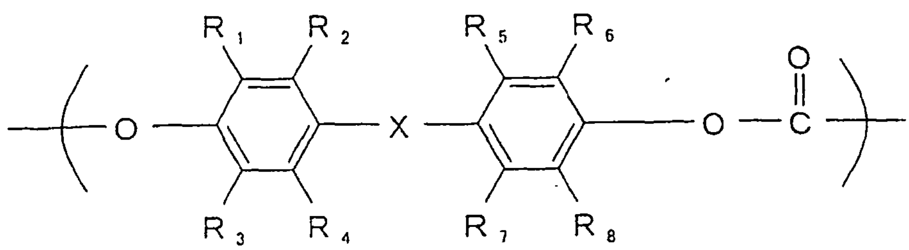

(I)

where $R_1$-$R_8$ each independently represent at least one selected from the group consisting of hydrogen, halogens and hydrocarbons of 1-6 carbon atoms, and X is

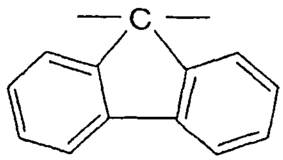,

and 90-10 mole percent of a repeating unit represented by the following formula (II)

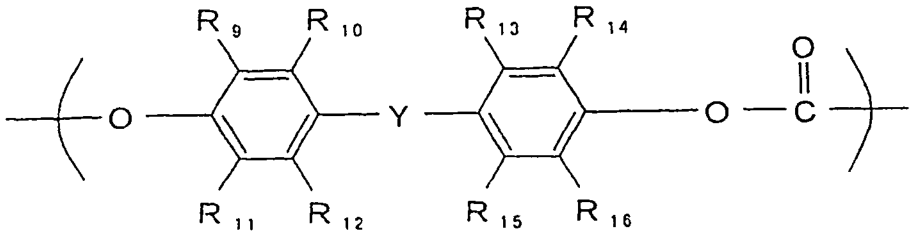 (II)

where $R_9$-$R_{16}$ each independently represent at least one selected from the group consisting of hydrogen, halogens and hydrocarbons of 1-22 carbon atoms, and Y is one of the following formulas

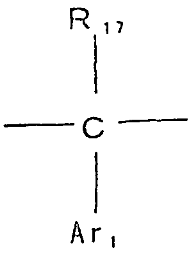, 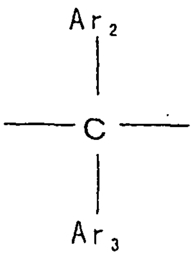, 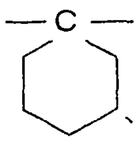, 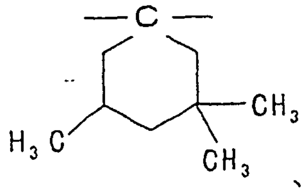, 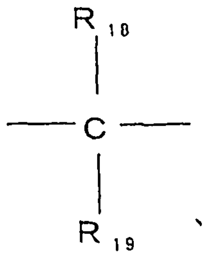,

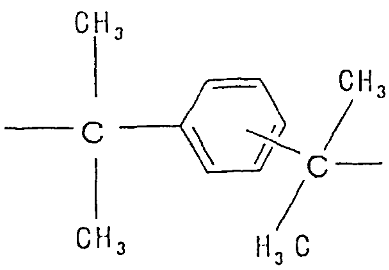, 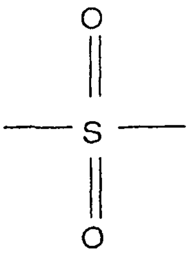, 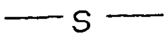, 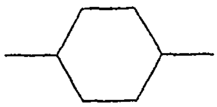,

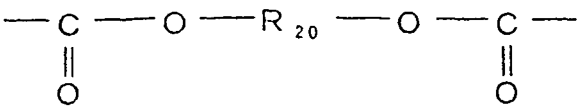, 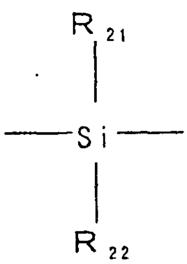 and 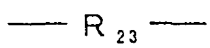

where $R_{17}$-$R_{19}$, $R_{21}$ and $R_{22}$ each independently represent at least one selected from among hydrogen, halogens and hydrocarbons of 1-22 carbon atoms, $R_{20}$ and $R_{23}$ each independently represent at least one selected from among hydrocarbons of 1-20 carbon atoms, and $Ar_1$, $Ar_2$ and $Ar_3$ each independently represent at least one selected from among aryl groups of 6-10 carbon atoms.

**9.** An optical recording medium protecting film according to claim 7, **characterized in that** the transparent film is a transparent film made of a polycarbonate copolymer and/or blend comprising 30-85 mole percent of a repeating unit represented by the following formula (III)

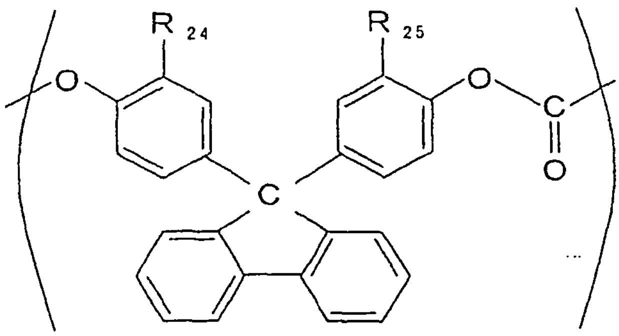

(III)

where $R_{24}$ and $R_{25}$ each independently represent at least one selected from among hydrogen and methyl, and 70-15 mole percent of a repeating unit represented by the following formula (IV)

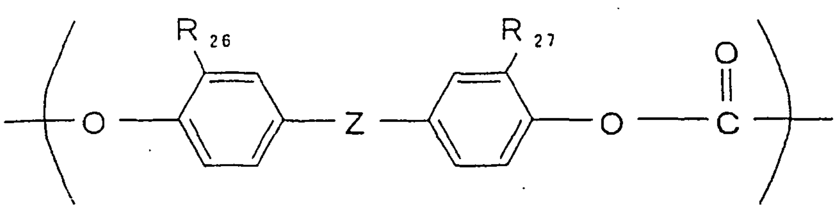

(IV)

where $R_{26}$ and $R_{27}$ are each independently selected from among hydrogen and methyl, and Z is selected from among the following groups.

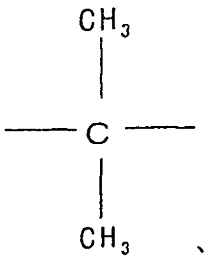 , 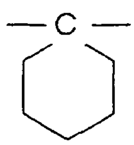 , 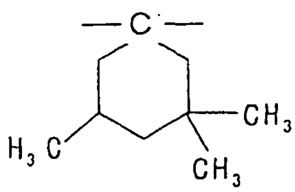 , and 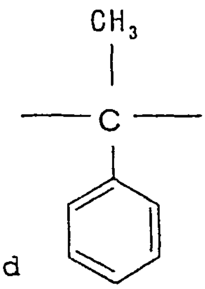

**10.** An optical recording medium protecting film according to claim 5, wherein said polymer with positive refractive index anisotropy is poly(2,6-dimethyl-1,4-phenylene oxide), said polymer with negative refractive index anisotropy is polystyrene, and the polystyrene content is 67-75 wt% based on the total of said polymers with positive and negative refractive index anisotropy.

**11.** An optical recording medium protecting film according to claim 1, **characterized in that** the transparent film is fabricated by solution cast film formation.

12. An optical recording medium protecting film according to claim 1, **characterized in that** the film thickness of the transparent film is 5-200 $\mu$m.

13. An optical recording medium **characterized by** having a data recording layer and a protecting film on a substrate wherein light is incident from the side of said protecting film and said protecting film is a single transparent film made of a thermoplastic resin, having retardation at a wavelength of 550 nm that satisfies both of the following inequalities (1) and (2), a glass transition temperature of 120°C or higher and a water absorption of no greater than 1 wt%.

$$|R(550)| \leq 15 \text{ nm} \quad (1)$$

$$|K(550)| \leq 40 \text{ nm} \quad (2)$$

where R(550) is the in-plane retardation of the transparent film at a wavelength of 550 nm and K(550) is the value calculated by $K = [n_z - (n_x + n_y)/2] \times d$ (where $n_x$, $n_y$ and $n_z$ are the three-dimensional refractive indexes of the transparent film in the x-axis, y-axis and z-axis directions, respectively, and d is the thickness of the transparent films) for the transparent film at a wavelength of 550 nm.

14. An optical recording medium according to claim 13, wherein the retardations of said protecting film at wavelengths of 450 nm and 550 nm satisfy (A) both the following inequalities (3) and (4), (B) the following inequality (3), or (C) the following inequality (4).

$$R(450) / R(550) < 1 \quad (3)$$

$$K(450) / K(550) < 1 \quad (4)$$

where R(450) and R(550) are the in-plane retardation of the transparent film at wavelengths of 450 nm and 550 nm, respectively, and K(450) and K(550) are the values calculated by $K = [n_z - (n_x + n_y)/2] \times d$ (where $n_x$, $n_y$ and $n_z$ are the three-dimensional refractive indexes of the transparent film in the x-axis, y-axis and z-axis directions, respectively, and d is the thickness of the transparent film) for the transparent film at a wavelength of 450 nm and 550 nm respectively.

**Patentansprüche**

1. Schutzfolie für ein optisches Aufzeichnungsmedium, **dadurch kennzeichnet, dass** die Folie eine einzelne transparente Folie ist, welche aus einem thermoplastischen Harz hergestellt ist, eine Glasübergangstemperatur von 120 °C oder höher und eine Wasseraufnahme von nicht größer als 1 Gew.% aufweist und eine Retardation bei einer Wellenlänge von 550 nm aufweist, welche die beiden folgenden Ungleichungen (1) und (2) erfüllt:

$$|R(550)| \leq 15 \text{ nm} \quad (1)$$

$$|K(550)| \leq 40 \text{ nm} \quad (2)$$

worin R(550) die Retardation in der Ebene der transparenten Folie bei einer Wellenlänge von 550 nm ist und worin K(550) der nach $K = [n_z - (n_x + n_y)/2] \times d$ (worin $n_x$, $n_y$ und $n_z$ die dreidimensionalen Brechungsindices der transparenten Folie in Richtung der x-Achse, y-Achse bzw. z-Achse sind und worin d die Dicke der transparenten Folie ist) berechnete Wert für die transparente Folie bei einer Wellenlänge von 550 nm ist.

**2.** Schutzfolie für ein optisches Aufzeichnungsmedium nach Anspruch 1, wobei die Retardationen bei Wellenlängen von 450 nm und 550 nm (A) die beiden folgenden Ungleichungen (3) und (4) erfüllen, (B) die folgende Ungleichung (3) erfüllen oder (C) die folgende Ungleichung (4) erfüllen:

$$R(450) / R(550) < 1 \quad (3)$$

$$K(450) / K(550) < 1 \quad (4)$$

worin R(450) und R(550) die Retardation in der Ebene der transparenten Folie bei Wellenlängen von 450 nm bzw. 550 nm sind und worin K(450) und K(550) die nach $K = [n_z - (n_x + n_y)/2] \times d$ (worin $n_x$, $n_y$ und $n_z$ die dreidimensionalen Brechungsindices der transparenten Folie in Richtung der x-Achse, y-Achse bzw, z-Achse sind und worin d die Dicke der transparenten Folie ist) berechneten Werte für die transparente Folie bei einer Wellenlänge von 450 nm bzw. 550 nm sind.

**3.** Schutzfolie für ein optisches Aufzeichnungsmedium nach Anspruch 2, wobei die Retardation in der Ebene der transparenten Folie in einem Wellenlängenbereich von 380-550 nm geringer wird, wenn die Wellenlänge kürzer wird.

**4.** Schutzfolie für ein optisches Aufzeichnungsmedium nach Anspruch 1, umfassend eine transparente Folie, wobei

(1) die Folie aus einem Polymer hergestellt ist, umfassend eine Monomereinheit eines Polymers mit einer positiven Anisotropie des Brechungsindex (im Folgenden als "erste Monomereinheit" bezeichnet) und eine Monomereinheit eines Polymers mit einer negativen Anisotropie des Brechungsindex (im Folgenden als "zweite Monomereinheit" bezeichnet);
(2) R(450)/R(550) für das Polymer, welches auf der ersten Monomereinheit basiert, kleiner ist als R(450)/R(550) für das Polymer, welches auf der zweiten Monomereinheit basiert; und
(3) die Folie eine positive Anisotropie des Brechungsindex aufweist.

**5.** Schutzfolie für ein optisches Aufzeichnungsmedium nach Anspruch 1, umfassend eine transparente Folie, wobei

(1) die Folie aus einem Polymer hergestellt ist, umfassend eine Monomereinheit, welche ein Polymer mit positiver Anisotropie des Brechungsindex bildet (im Folgenden als "erste Monomereinheit" bezeichnet), und eine Monomereinheit, welche ein Polymer mit negativer Anisotropie des Brechungsindex bildet (im Folgenden als "zweite Monomereinheit" bezeichnet);
(2) R(450)/R(550) für das Polymer, welches auf der ersten Monomereinheit basiert, größer ist als R(450)/R(550) für das Polymer, welches auf der zweiten Monomereinheit basiert; und
(3) die Folie eine negative Anisotropie des Brechungsindex aufweist.

**6.** Schutzfolie für ein optisches Aufzeichnungsmedium nach Anspruch 1, wobei die Dickenunregelmäßigkeit der transparenten Folie nicht größer ist als 1,5 μm.

**7.** Schutzfolie für ein optisches Aufzeichnungsmedium nach Anspruch 1, wobei die transparente Folie ein Polycarbonat mit einem Fluoren-Skelett umfasst.

**8.** Schutzfolie für ein optisches Aufzeichnungsmedium nach Anspruch 6, **dadurch gekennzeichnet, dass** die transparente Folie eine transparente Folie ist, welche hergestellt ist aus einem Polycarbonat-Copolymer und/oder einer Mischung, umfassend 10-90 mol% einer Struktureinheit, repräsentiert durch die folgende Formel (I)

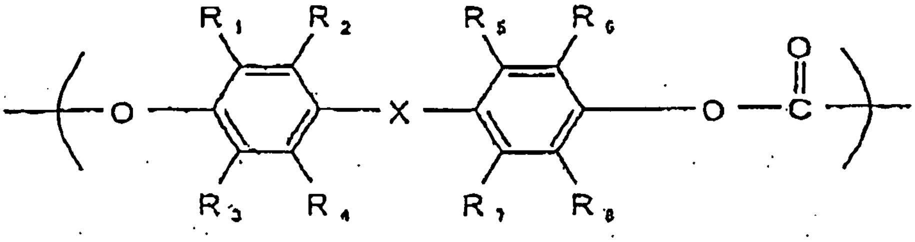 (I)

worin $R_1$ bis $R_8$ jeweils unabhängig voneinander mindestens ein Mitglied repräsentieren, ausgewählt aus der Gruppe bestehend aus Wasserstoff, Halogenen und Kohlenwasserstoffen mit 1 bis 6 Kohlenstoffatomen, und worin X der folgenden Formel entspricht

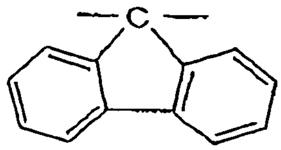

und 90-10 mol% einer Struktureinheit, repräsentiert durch die folgende Formel (II)

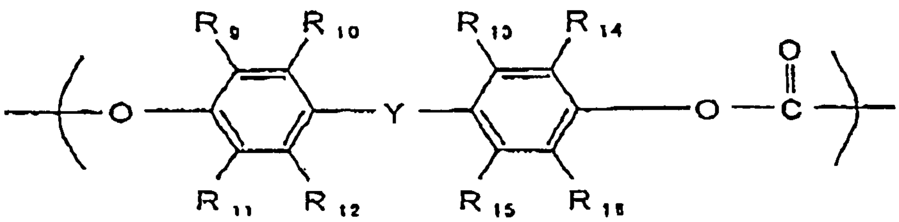 (II)

worin $R_9$ bis $R_{16}$ jeweils unabhängig voneinander mindestens ein Mitglied repräsentieren, ausgewählt aus der Gruppe bestehend aus Wasserstoff, Halogenen und Kohlenwasserstoffen mit 1 bis 22 Kohlenstoffatomen, und worin Y einer der folgenden Formel entspricht

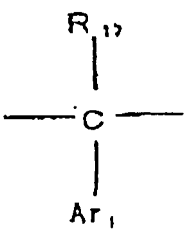, 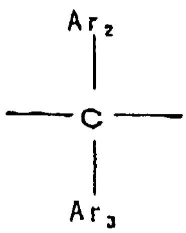, 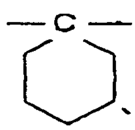, 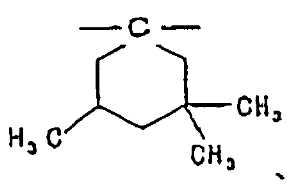, 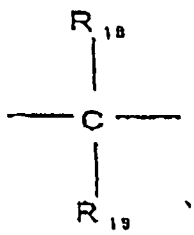,

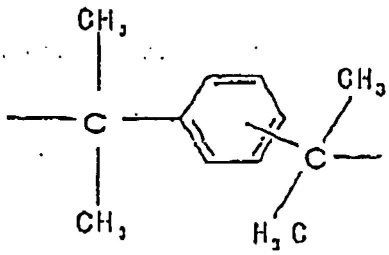 , 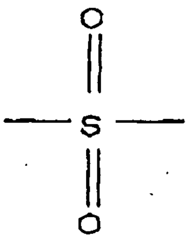 , 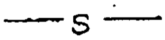 , 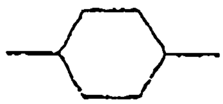 ,

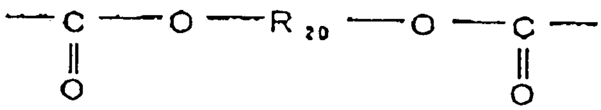 , 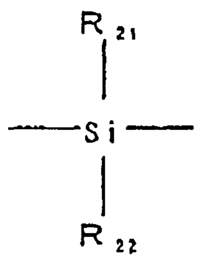 und 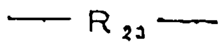

wobei $R_{17}$ bis $R_{19}$, $R_{21}$ und $R_{22}$ jeweils unabhängig voneinander mindestens ein Mitglied repräsentieren, ausgewählt aus Wasserstoff, Halogenen und Kohlenwasserstoffen mit 1 bis 22 Kohlenstoffatomen, wobei $R_{20}$ und $R_{23}$ jeweils unabhängig voneinander mindestens ein Mitglied repräsentieren, ausgewählt aus Kohlenwasserstoffen mit 1 bis 20 Kohlenstoffatomen, und wobei $Ar_1$, $Ar_2$ und $Ar_3$ jeweils unabhängig voneinander mindestens ein Mitglied repräsentieren, ausgewählt aus Arylgruppen mit 6 bis 10 Kohlenstoffatomen.

**9.** Schutzfolie für ein optisches Aufzeichnungsmedium nach Anspruch 7, **dadurch gekennzeichnet, dass** die transparente Folie eine transparente Folie ist, welche hergestellt ist aus einem Polycarbonat-Copolymer und/oder einer Mischung, umfassend 30-85 mol% einer Struktureinheit, repräsentiert durch die folgende Formel (III)

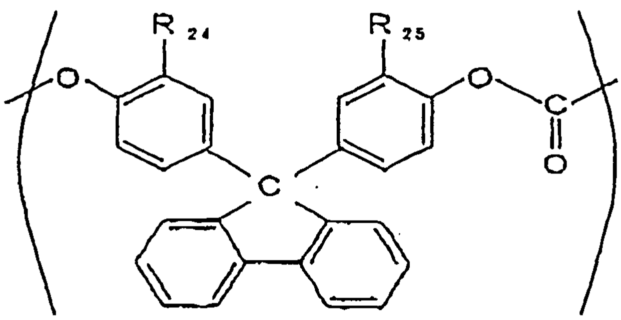

(III)

worin $R_{24}$ und $R_{25}$ jeweils unabhängig voneinander mindestens ein Mitglied repräsentieren, ausgewählt aus Wasserstoff und Methyl,
und 70-15 mol% einer Struktureinheit, repräsentiert durch die folgende Formel (IV)

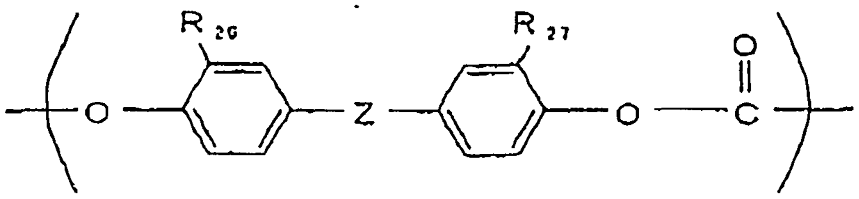 (IV)

worin $R_{26}$ und $R_{27}$ jeweils unabhängig voneinander ausgewählt sind aus Wasserstoff und Methyl, und worin Z aus den folgenden Gruppen ausgewählt ist:

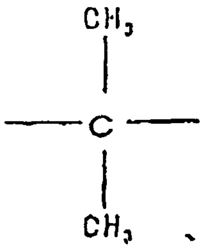, 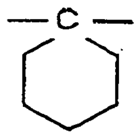, 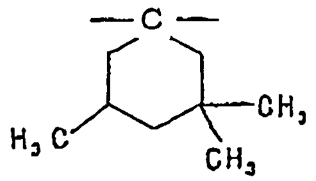, und 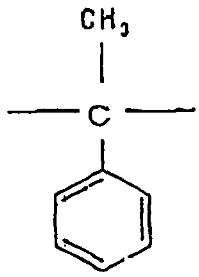

**10.** Schutzfolie für ein optisches Aufzeichnungsmedium nach Anspruch 5, wobei das Polymer mit positiver Anisotropie des Brechungsindex Poly-(2,6-dimethyl-1,4-phenylenoxid) ist, wobei das Polymer mit negativer Anisotropie des Brechungsindex Polystyrol ist und wobei der Polystyrolgehalt 67-75 Gew.% beträgt, basierend auf der Gesamtheit der Polymere mit positiver und negativer Anisotropie des Brechungsindex.

**11.** Schutzfolie für ein optisches Aufzeichnungsmedium nach Anspruch 1, **dadurch gekennzeichnet, dass** die transparente Folie hergestellt ist durch Folienbildung mittels Lösungsgießen.

**12.** Schutzfolie für ein optisches Aufzeichnungsmedium nach Anspruch 1, **dadurch gekennzeichnet, dass** die Foliendicke der transparenten Folie 5-200 μm beträgt.

**13.** Optisches Aufzeichnungsmedium, **dadurch gekennzeichnet, dass** es eine Datenaufzeichnungsschicht und eine Schutzfolie auf einem Substrat aufweist, wobei Licht von der Seite der Schutzfolie einfällt und wobei die Schutzfolie eine einzelne transparente Folie ist, die aus einem thermoplastischen Harz hergestellt ist und aufweist: eine Retardation bei einer Wellenlänge von 550 nm, welche die beiden folgenden Ungleichungen (1) und (2) erfüllt, eine Glasübergangstemperatur von 120 °C oder höher und eine Wasseraufnahme von nicht größer als 1 Gew.%:

$$|R(550)| \leq 15\ \text{nm} \qquad (1)$$

$$|K(550)| \leq 40\ \text{nm} \qquad (2)$$

worin R(550) die Retardation in der Ebene der transparenten Folie bei einer Wellenlänge von 550 nm ist und worin K(550) der nach $K = [n_z - (n_x + n_y)/2] \times d$ (worin $n_x$, $n_y$ und $n_z$ die dreidimensionalen Brechungsindices der transparenten Folie in Richtung der x-Achse, y-Achse bzw. z-Achse sind und worin d die Dicke der transparenten Folie ist) berechnete Wert für die transparente Folie bei einer Wellenlänge von 550 nm ist.

14. Optisches Aufzeichnungsmedium nach Anspruch 13, wobei die Retardationen der Schutzfolie bei Wellenlängen von 450 nm und 550 nm (A) die beiden folgenden Ungleichungen (3) und (4) erfüllen, (B) die folgende Ungleichung (3) erfüllen oder (C) die folgende Ungleichung (4) erfüllen:

$$R(450) / R(550) < 1 \quad (3)$$

$$K(450) / K(550) < 1 \quad (4)$$

worin R(450) und R(550) die Retardation in der Ebene der transparenten Folie bei Wellenlängen von 450 nm bzw. 550 nm sind und worin K(450) und K(550) die nach $K = [n_z - (n_x + n_y)/2] \times d$ (worin $n_x$, $n_y$ und $n_z$ die dreidimensionalen Brechungsindices der transparenten Folie in Richtung der x-Achse, y-Achse bzw. z-Achse sind und worin d die Dicke der transparenten Folie Ist) berechneten Werte für die transparente Folie bei einer Wellenlänge von 450 nm bzw. 550 nm sind.

## Revendications

1. Film de protection de support d'enregistrement optique **caractérisé par le fait** d'être un film transparent unique constitué d'une résine thermoplastique, ayant une température de transition vitreuse de 120 °C ou plus et une absorption d'eau non supérieure à 1 % en poids, et ayant un retard optique à une longueur d'onde de 550 nm qui satisfait les deux inégalités (1) et (2) suivantes :

$$|R(550)| \leq 15 \text{ nm} \quad (1)$$

$$|K(550)| \leq 40 \text{ nm} \quad (2)$$

où R(550) est le retard dans le plan du film transparent à une longueur d'onde de 550 nm et K(550) est la valeur calculée par $K = [n_z - (n_x + n_y)/2] \times d$ (où $n_x$, $n_y$ et $n_z$ sont les indices de réfraction tridimensionnels du film transparent dans les directions de l'axe x, de l'axe y et de l'axe z, respectivement, et d est l'épaisseur du film transparent) pour le film transparent à une longueur d'onde de 550 nm.

2. Film de protection de support d'enregistrement optique selon la revendication 1, dans lequel les retards optiques à des longueurs d'onde de 450 nm et 550 nm satisfont (A) les deux inégalités (3) et (4) suivantes, (B) l'inégalité (3) suivante, ou (C) l'inégalité (4) suivante :

$$R(450)/R(550) < 1 \quad (3)$$

$$K(450)/K(550) < 1 \quad (4)$$

où R(450) et R(550) sont le retard dans le plan du film transparent à des longueurs d'onde de 450 nm et 550 nm, respectivement, et K(450) et K(550) sont les valeurs calculées par $K = [n_z - (n_x + n_y)/2] \times d$ (où $n_x$, $n_y$ et $n_z$ sont les indices de réfraction tridimensionnels du film transparent dans les directions de l'axe x, de l'axe y et de l'axe z, respectivement, et d est l'épaisseur du film transparent) pour le film transparent à la longueur d'onde de 450 nm et 550 nm respectivement.

3. Film de protection de support d'enregistrement optique selon la revendication 2, dans lequel le retard dans le plan

du film transparent dans une gamme de longueurs d'onde de 380 à 550 nm est inférieur lorsque la longueur d'onde est plus petite.

**4.** Film de protection de support d'enregistrement optique selon la revendication 1, qui comprend un film transparent

(1) qui est un film constitué d'un polymère composé d'un motif monomère d'un polymère ayant une anisotropie positive d'indice de réfraction (ci-après désigné par « premier motif monomère ») et d'un motif monomère d'un polymère ayant une anisotropie négative d'indice de réfraction (ci-après désigné par « second motif monomère ») ;
(2) dans lequel le rapport R(450)/R(550) du polymère basé sur le premier motif monomère est inférieur au rapport R(450)/R(550) du polymère basé sur le second motif monomère ; et
(3) qui a une anisotropie positive d'indice de réfraction.

**5.** Film de protection de support d'enregistrement optique selon la revendication 1, qui comprend un film transparent

(1) qui est un film constitué d'un polymère composé d'un motif monomère qui forme un polymère ayant une anisotropie positive d'indice de réfraction (ci-après désigné par « premier motif monomère ») et d'un motif monomère qui forme un polymère ayant une anisotropie négative d'indice de réfraction (ci-après désigné par « second motif monomère ») ;
(2) dans lequel le rapport R(450)/R(550) du polymère basé sur le premier motif monomère est supérieur au rapport R(450)/R(550) du polymère basé sur le second motif monomère ; et
(3) qui a une anisotropie négative d'indice de réfraction.

**6.** Film de protection de support d'enregistrement optique selon la revendication 1, dans lequel l'irrégularité d'épaisseur du film transparent n'est pas supérieure à 1,5 μm.

**7.** Film de protection de support d'enregistrement optique selon la revendication 1, dans lequel ledit film transparent comprend un poly(carbonate) ayant un squelette fluorène.

**8.** Film de protection de support d'enregistrement optique selon la revendication 6, **caractérisé en ce que** le film transparent est un film transparent constitué d'un copolymère de poly(carbonate) et/ou d'un mélange comprenant 10 à 90 pour cent en mole d'un motif répété représenté par la formule (I) suivante

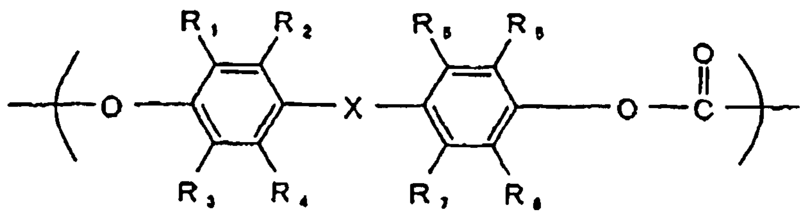

(I)

où $R_1$ à $R_8$ représentent chacun indépendamment au moins un élément sélectionné dans le groupe constitué d'un atome d'hydrogène, des atomes d'halogène et des hydrocarbures de 1 à 6 atomes de carbone, et X est

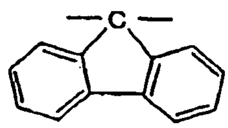

,

et 90 à 10 pour cent en mole d'un motif répété représenté par la formule (II) suivante

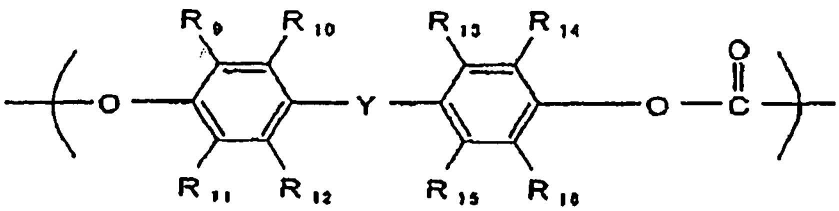

(II)

où $R_9$ à $R_{16}$ représentent chacun indépendamment au moins un élément sélectionné dans le groupe constitué d'un atome d'hydrogène, des atomes d'halogène et des hydrocarbures de 1 à 22 atomes de carbone, et Y est l'une des formules suivantes

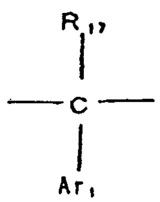 , 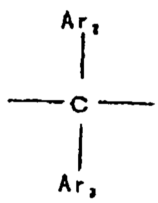 , 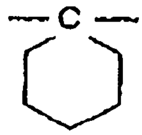 , 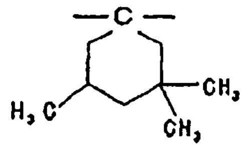 , 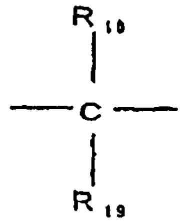 ,

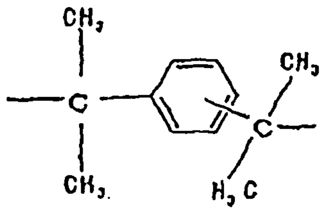 , 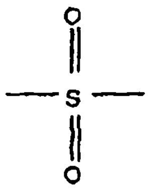 , —S— , 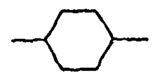 ,

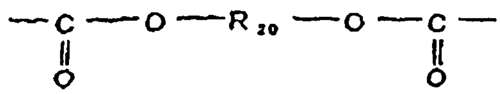 , 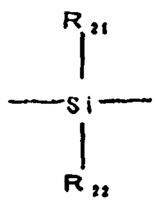 et $-R_{23}-$

où $R_{17}$ à $R_{19}$, $R_{21}$ et $R_{22}$ représentent chacun indépendamment au moins un élément sélectionné parmi un atome d'hydrogène, des atomes d'halogène et des hydrocarbures de 1 à 22 atomes de carbone, $R_{20}$ et $R_{23}$ représentent chacun indépendamment au moins un élément sélectionné parmi les hydrocarbures de 1 à 20 atomes de carbone, et $Ar_1$, $Ar_2$ et $Ar_3$ représentent chacun indépendamment au moins un élément sélectionné parmi des groupes aryle de 6 à 10 atomes de carbone.

9. Film de protection de support d'enregistrement optique selon la revendication 7, **caractérisé en ce que** le film transparent est un film transparent constitué d'un copolymère de poly(carbonate) et/ou d'un mélange comprenant 30 à 85 pour cent en mole d'un motif répété représenté par la formule (III) suivante

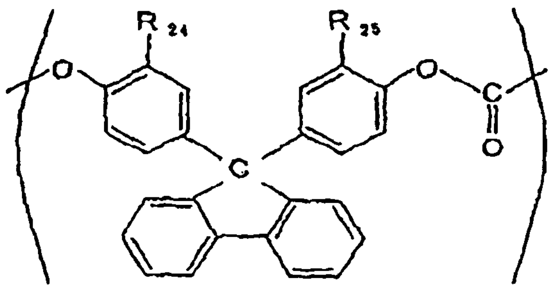

(III)

où $R_{24}$ et $R_{25}$ représentent chacun indépendamment au moins un élément sélectionné parmi un atome d'hydrogène et un groupe méthyle, et 70 à 15 pour cent en mole d'un motif répété représenté par la formule (IV) suivante

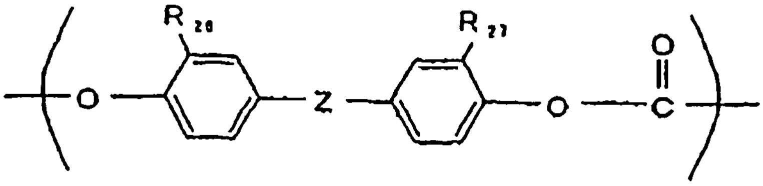

(IV)

où $R_{26}$ et $R_{27}$ sont chacun indépendamment sélectionnés parmi un atome d'hydrogène et un groupe méthyle, et Z est sélectionné parmi les groupes suivants :

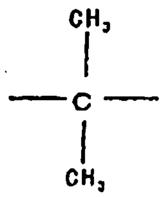 , 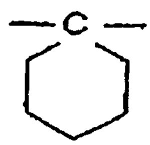 , 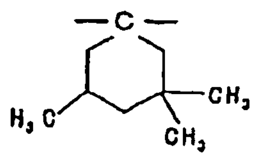 et 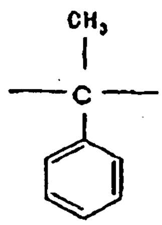 .

**10.** Film de protection de support d'enregistrement optique selon la revendication 5, dans lequel ledit polymère ayant une anisotropie positive d'indice de réfraction est le poly(oxyde de 2,6-diméthyl-1,4-phénylène), ledit polymère ayant une anisotropie négative d'indice de réfraction est le poly(styrène), et la teneur en poly(styrène) est de 67 à 75 % en poids sur la base totale desdits polymères ayant une anisotropie positive et négative d'indice de réfraction.

**11.** Film de protection de support d'enregistrement optique selon la revendication 1, **caractérisé en ce que** le film transparent est fabriqué par formation de film coulé à partir d'une solution.

**12.** Film de protection de support d'enregistrement optique selon la revendication 1, **caractérisé en ce que** l'épaisseur de film du film transparent est de 5 à 200 μm.

**13.** Support d'enregistrement optique **caractérisé par** le fait de comporter une couche d'enregistrement de données et un film de protection sur un substrat dans lequel la lumière est incidente depuis le côté dudit film de protection et ledit film de protection est un film transparent unique constitué d'une résine thermoplastique, ayant une température de transition vitreuse de 120 °C ou plus et une absorption d'eau non supérieure à 1 % en poids, et ayant un retard optique à une longueur d'onde de 550 nm qui satisfait les deux inégalités (1) et (2) suivantes :

$$|R(550)| \leq 15 \text{ nm} \qquad (1)$$

$$|K(550)| \leq 40 \text{ nm} \qquad (2)$$

où R(550) est le retard dans le plan du film transparent à une longueur d'onde de 550 nm et K(550) est la valeur calculée par $K = [n_z - (n_x + n_y)/2] \times d$ (où $n_x$, $n_y$ et $n_z$ sont les indices de réfraction tridimensionnels du film transparent dans les directions de l'axe x, de l'axe y et de l'axe z, respectivement, et d est l'épaisseur du film transparent) pour le film transparent à une longueur d'onde de 550 nm.

**14.** Support d'enregistrement optique selon la revendication 13, dans lequel les retards optiques dudit film de protection à des longueurs d'onde de 450 nm et 550 nm satisfont (A) les deux inégalités (3) et (4) suivantes, (B) l'inégalité (3) suivante, ou (C) l'inégalité (4) suivante :

$$R(450)/R(550) < 1 \qquad (3)$$

$$K(450)/K(550) < 1 \qquad (4)$$

où R(450) et R(550) sont le retard dans le plan du film transparent à des longueurs d'onde de 450 nm et 550 nm, respectivement, et K(450) et K(550) sont les valeurs calculées par $K = [n_z - (n_x + n_y)/2] \times d$ (où $n_x$, $n_y$ et $n_z$ sont les indices de réfraction tridimensionnels du film transparent dans les directions de l'axe x, de l'axe y et de l'axe z, respectivement, et d est l'épaisseur du film transparent) pour le film transparent à la longueur d'onde de 450 nm et 550 nm respectivement.

Fig.1

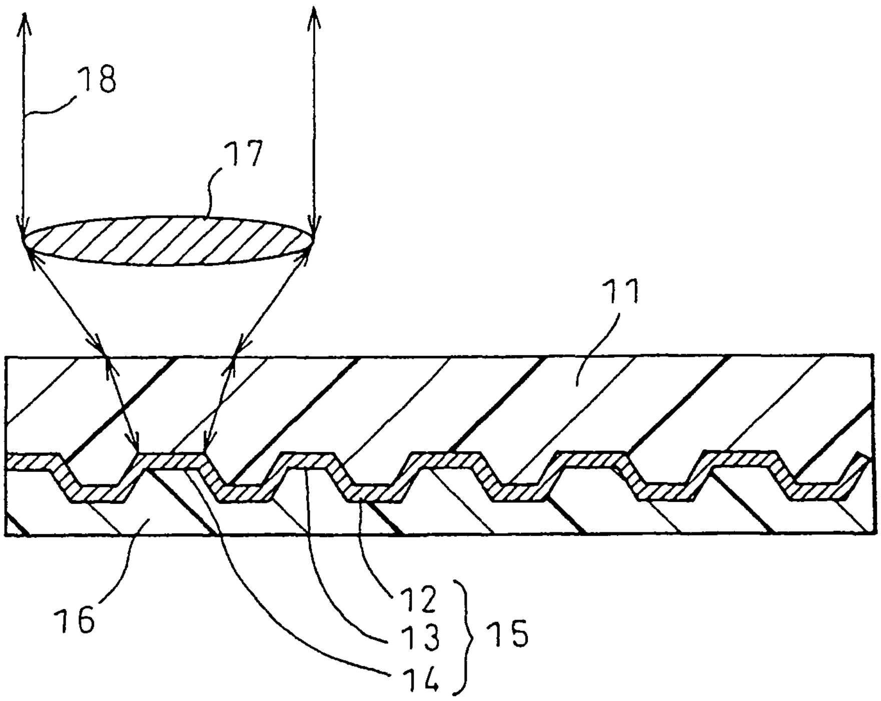


Fig.2

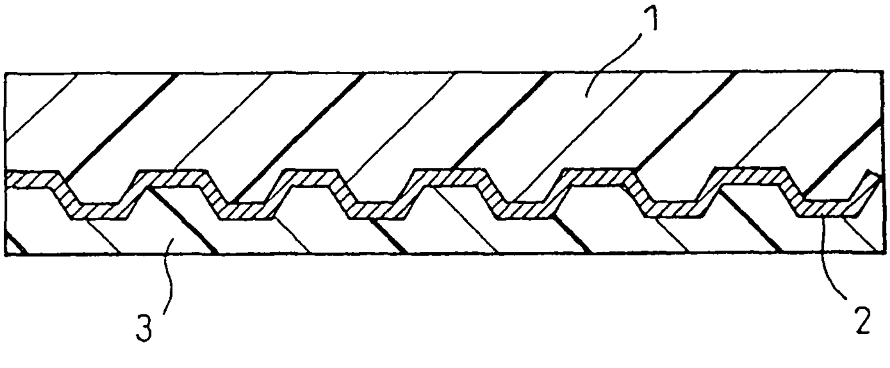

Fig.3

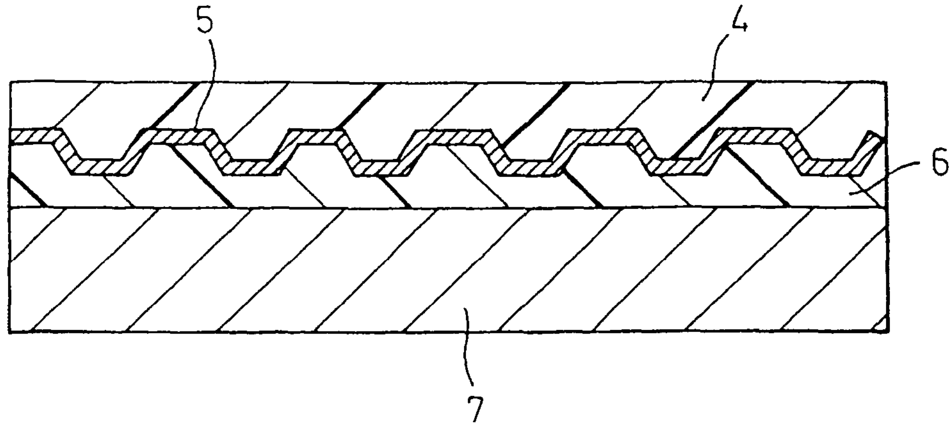


Fig.4

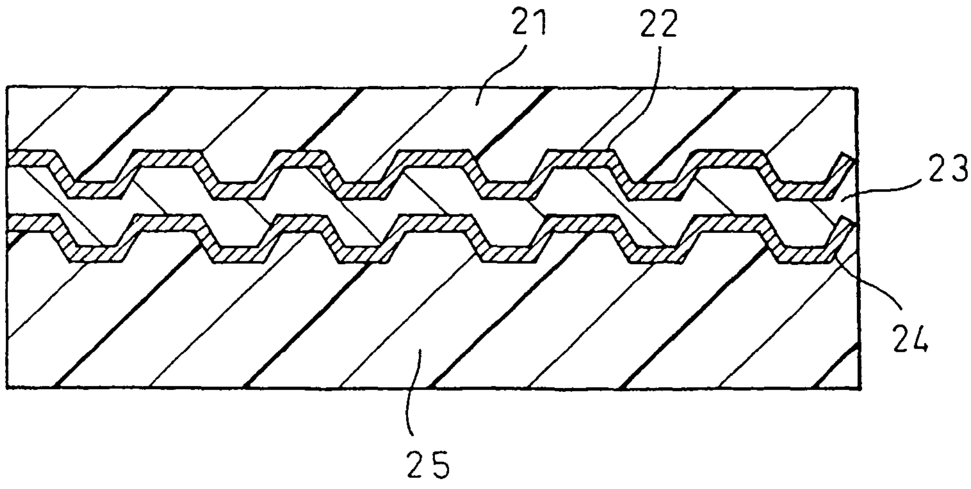

Fig. 5

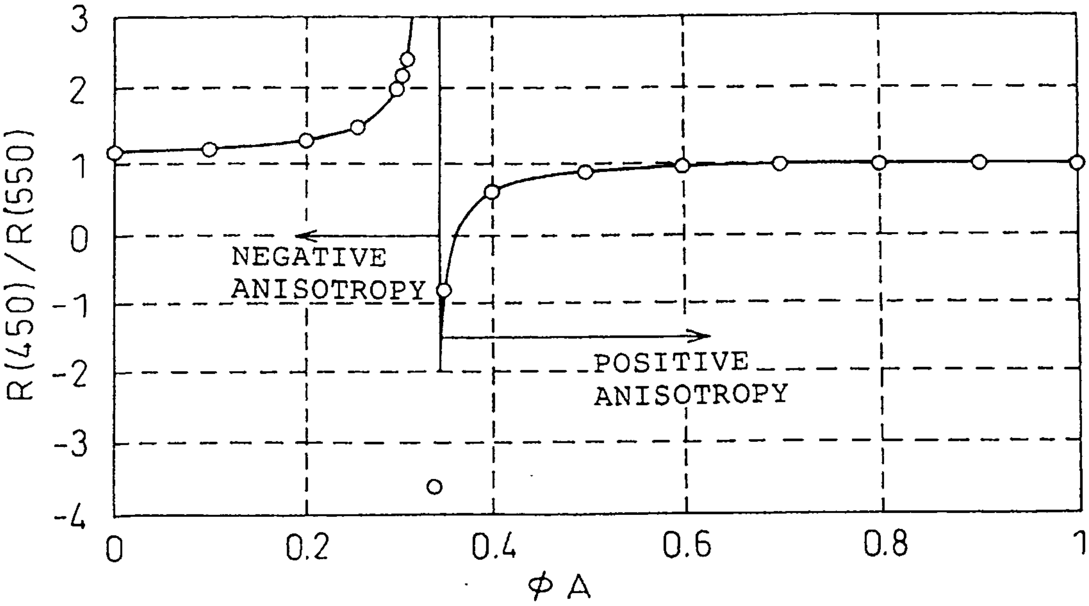
3
2
1
0
-1
-2
-3
-4
R(450)/R(550)
NEGATIVE
ANISOTROPY
POSITIVE
ANISOTROPY
0
0.2
0.4
0.6
0.8
1
φA

Fig. 6

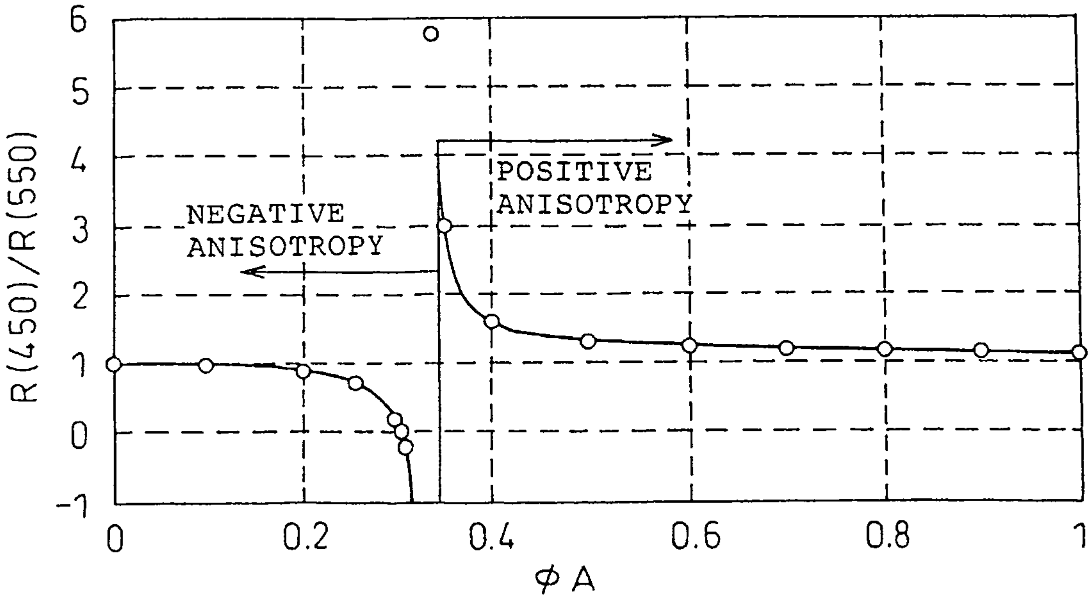
6
5
4
3
2
1
0
-1
R(450)/R(550)
NEGATIVE
ANISOTROPY
POSITIVE
ANISOTROPY
0
0.2
0.4
0.6
0.8
1
φA

Fig. 7

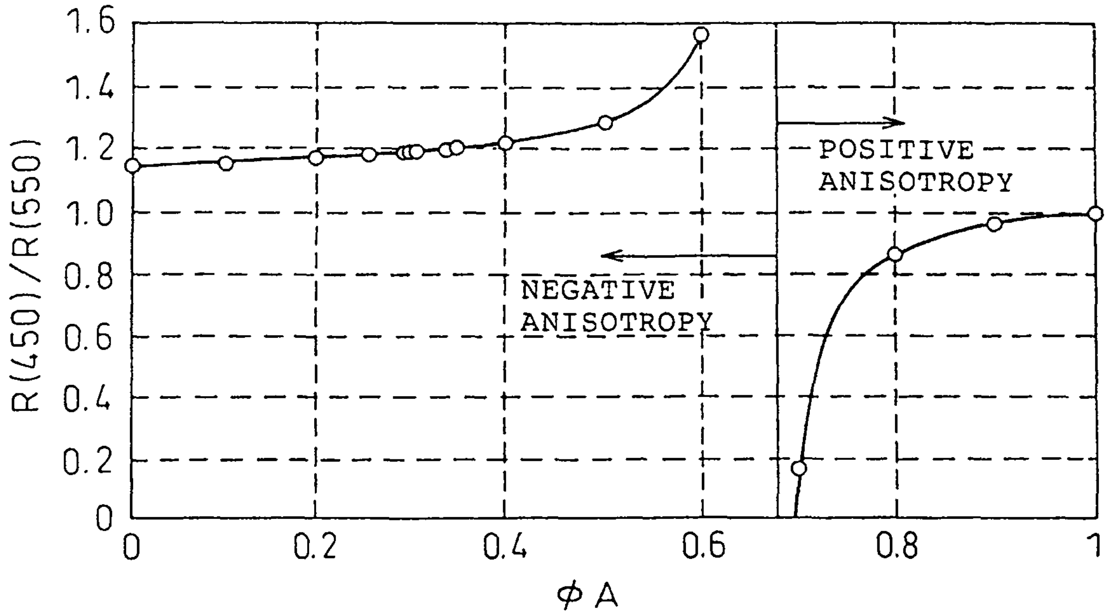
R(450)/R(550)
1.6
1.4
1.2
1.0
0.8
0.6
0.4
0.2
0
0
0.2
0.4
0.6
0.8
1
φA
POSITIVE
ANISOTROPY
NEGATIVE
ANISOTROPY

Fig. 8

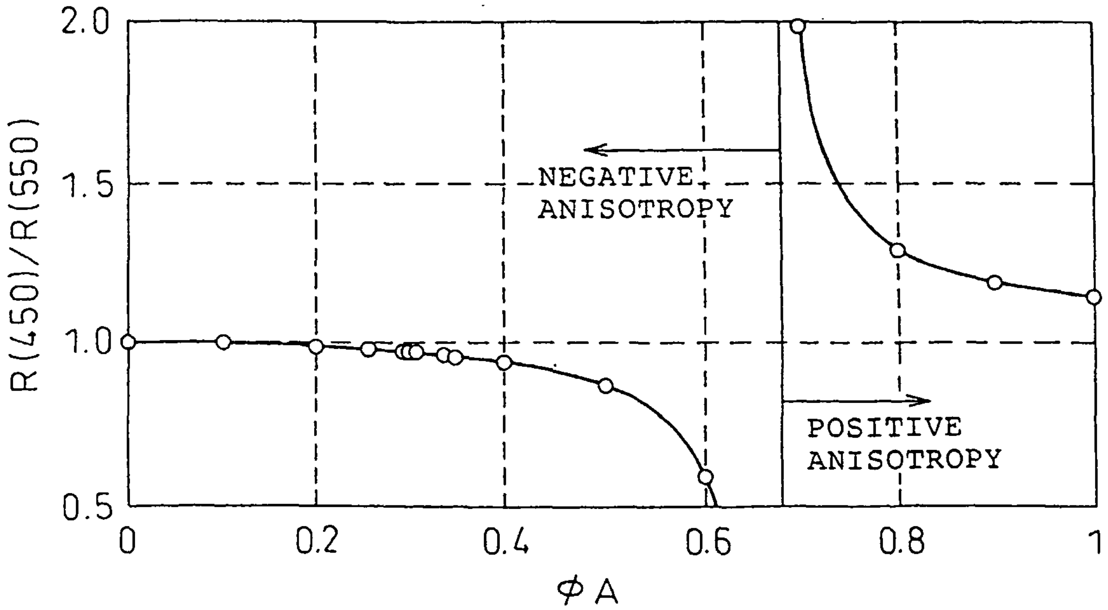
R(450)/R(550)
2.0
1.5
1.0
0.5
0
0.2
0.4
0.6
0.8
1
φA
NEGATIVE
ANISOTROPY
POSITIVE
ANISOTROPY

Fig. 9

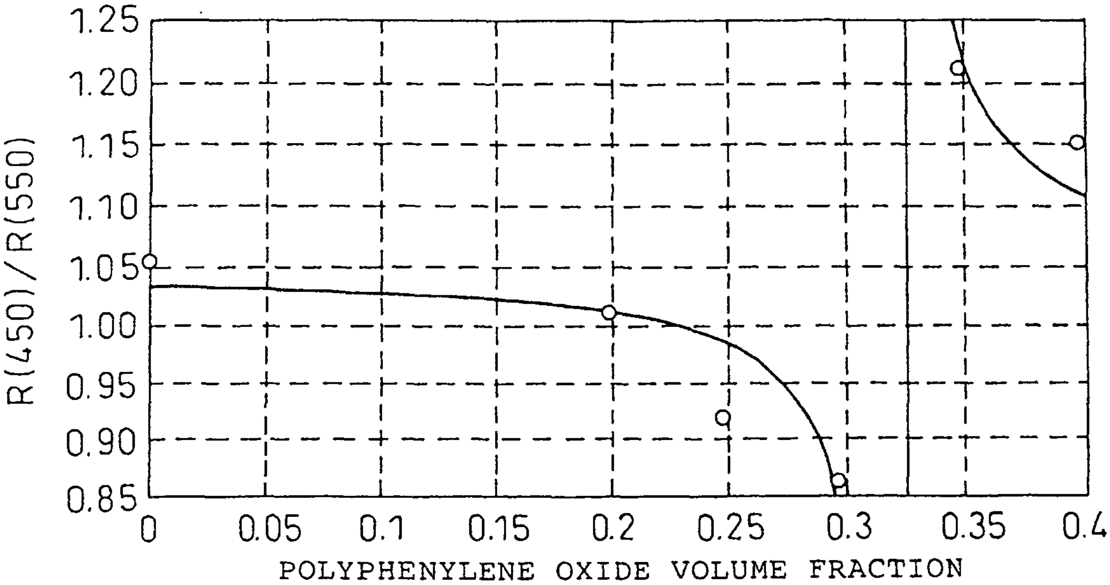
1.25
1.20
1.15
1.10
1.05
1.00
0.95
0.90
0.85
R(450)/R(550)
0
0.05
0.1
0.15
0.2
0.25
0.3
0.35
0.4
POLYPHENYLENE OXIDE VOLUME FRACTION

Fig.10

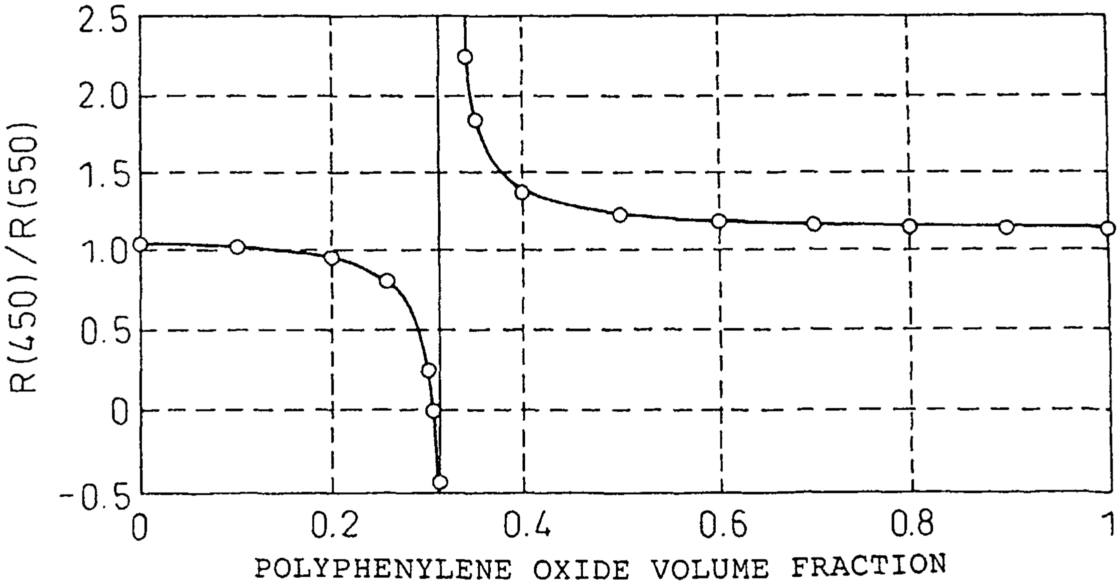
2.5
2.0
1.5
1.0
0.5
0
-0.5
R(450)/R(550)
0
0.2
0.4
0.6
0.8
1
POLYPHENYLENE OXIDE VOLUME FRACTION